# EUROPEAN PATENT APPLICATION

(11) **EP 4 694 306 A1**
(43) Date of publication of application: **11.02.2026**
(21) Application number: 24784188.5
(22) Date of filing: 29.03.2024
(51) Int. Cl.: H04W 28/02

(54) **INFORMATION INTERACTION METHOD AND COMMUNICATION DEVICE**

(30) Priority: 04.04.2023 CN 202310362587
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Murgitroyd & Company
(86) International application number: PCT/CN2024/084886
(87) International publication number: WO 2024/208103

(57) **Abstract**

Embodiments of this application provide an information interaction method and a communication device. The method applied to a first communication device includes: performing, by a first communication device, a first operation, including at least one of the following: in a case that a first condition is met, the first communication device performs a first sub-operation; the first communication device obtains fourth information, and the first communication device performs a second sub-operation based on the fourth information; the first communication device receives a QoS notification corresponding to a first data flow from a second communication device, and the first communication device sends a QoS notification corresponding to a first QoS flow or the first data flow based on the obtained QoS notification corresponding to the first data flow; and the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow.

## Description

### CROSS-REFERENCE TO RELATED APPLICATIONS

This application claims priority to Chinese Patent Application No. 202310362587.X filed in China on April 4, 2023, which is incorporated herein by reference in its entirety.

### TECHNICAL FIELD

Embodiments of this application relate to the field of wireless communications technologies, and in particular, to an information interaction method and a communication device.

### BACKGROUND

Currently, a radio access network (Radio Access Network, RAN) can disclose congestion information and quality of service (Quality of Service, QoS) notifications of QoS flows through user plane tunnels. When a QoS flow changes a serving device (such as an access network device) or a data flow changes a QoS flow, the disclosed information may change, for example, returning to an initial state. Therefore, how a network-side device obtains changed information is a problem to be solved by this application.

### SUMMARY

Embodiments of this application provide an information interaction method and a communication device, so as to resolve the problem of how a network-side device can obtain changed information.

According to a first aspect, an information interaction method is provided, where the method includes:
performing, by a first communication device, a first operation, including at least one of the following:
in a case that a first condition is met, the first communication device performs a first sub-operation;
the first communication device obtains fourth information, and the first communication device performs a second sub-operation based on the fourth information;
the first communication device receives a QoS notification corresponding to a first data flow from a second communication device, and the first communication device sends a QoS notification corresponding to a first QoS flow or the first data flow based on the obtained QoS notification corresponding to the first data flow; and
the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow.

The first condition being met includes at least one of the following:
a terminal undergoes an inter-access network device transfer, or the terminal has transferred from a first access network device to a second access network device;
the first quality of service QoS flow undergoes an inter-access network device transfer, or the first QoS flow has been transferred from the first access network device to the second access network device;
a QoS flow bound to the first data flow has changed, or the QoS flow bound to the first data flow has changed from a second QoS flow to the first QoS flow;
the first QoS flow has been established, and the second QoS flow has been released, or resources of the second QoS flow have been released;
a second endpoint corresponding to a tunnel of the terminal has changed, a second endpoint corresponding to the first QoS flow has changed, and/or a second endpoint corresponding to the first data flow has changed;
access network device side information for the tunnel of the terminal has changed, or access network device side information corresponding to the first QoS flow has changed, and/or access network device side information corresponding to the first data flow has changed;
third information has been obtained, where the third information includes information used to indicate at least one of the following: the terminal undergoes an inter-access network device transfer; the first QoS flow undergoes an inter-access network device transfer; the terminal has transferred from the first access network device to the second access network device; the first QoS flow has been transferred from the first access network device to the second access network device; the QoS flow bound to the first data flow has changed; the QoS flow bound to the first data flow has changed from the second QoS flow to the first QoS flow; and the first QoS flow has been established, and the second QoS flow has been released, or resources of the second QoS flow have been released;
information about a second endpoint has been obtained, including at least one of the following: information about the second endpoint corresponding to the tunnel of the terminal, information about the second endpoint corresponding to the first QoS flow, and information about the second endpoint corresponding to the first data flow; and
access network device side information has been obtained, including at least one of the following: access network device side information of the tunnel of the terminal, access network device side information corresponding to the first QoS flow, and access network device side information corresponding to the first data flow.

The second endpoint corresponding to the first QoS flow is one of the following: a target endpoint sending traffic of the first QoS flow, and a source endpoint receiving traffic of the first QoS flow.

The first sub-operation includes at least one of the following:
determining that QoS of the first QoS flow can be guaranteed; and determining that GFBR of the first QoS flow can be guaranteed;
interpreting at least one of the obtaining third information, obtaining information about the second endpoint, and/or obtaining access network device side information as obtaining a QoS notification corresponding to the first QoS flow, where the QoS notification corresponding to the first QoS flow includes one of the following: QoS can be guaranteed, and GFBR can be guaranteed;
determining that the first QoS flow has no congestion;
determining not to perform congestion marking on data packets of the first QoS flow;
determining that congestion information of the first QoS flow is information used to indicate one of the following: no congestion, a congestion situation being a minimum value, a percentage of congestion situation being a minimum value, and the congestion situation being zero or the percentage of congestion situation being zero;
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no congestion, a congestion situation being a minimum value, a corresponding percentage of the congestion situation being a minimum value, and the congestion situation being zero or the corresponding percentage of congestion situation being zero;
determining that the congestion information of the first QoS flow is information used to indicate one of the following: not performing congestion marking on data packets, the number or a percentage of data packets required to be marked for congestion being a minimum value, and performing congestion marking on zero data packets or zero percent of data packets; and
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no longer performing congestion marking on data packets, the number of data packets required to be marked for congestion being a minimum value, performing congestion marking on zero data packets or zero percent of data packets.

The second sub-operation includes at least one of the following:
sending a QoS notification corresponding to the first QoS flow or the first data flow; and
sending congestion information corresponding to the first QoS flow or the first data flow.

According to a second aspect, an information interaction method is provided, where the method includes:
performing, by a second communication device, a second operation; where
the second operation includes at least one of the following:
   sending third information to a first communication device, where the third information includes information used to indicate at least one of the following: a terminal undergoes an inter-access network device transfer; a first QoS flow undergoes an inter-access network device transfer; the terminal has transferred from a first access network device to a second access network device; the first QoS flow has been transferred from the first access network device to the second access network device; a QoS flow bound to a first data flow has changed; the QoS flow bound to the first data flow has changed from a second QoS flow to the first QoS flow; and the first QoS flow has been established, and the second QoS flow has been released, or resources of the second QoS flow have been released;
   sending fourth information to the first communication device, where the fourth information includes at least one of the following: congestion information corresponding to the first data flow or the second QoS flow, and a QoS notification corresponding to the first data flow or the second QoS flow;
   sending a QoS notification corresponding to the first data flow to the first communication device;
   sending the congestion information corresponding to the first data flow to the first communication device;
   sending information about a second endpoint to the first communication device, including at least one of the following: information about a second endpoint corresponding to a tunnel of the terminal, information about a second endpoint corresponding to the first QoS flow, and information about a second endpoint corresponding to the first data flow;
   sending access network device side information to the first communication device, including at least one of the following: access network device side information of the tunnel of the terminal, access network device side information corresponding to the first QoS flow, and access network device side information corresponding to the first data flow; and
   triggering an N4 modification process.

According to a third aspect, an information interaction method is provided, where the method includes:
in a case that a third condition is met, performing, by a third communication device, a third operation; where
the third condition includes at least one of the following:
   a terminal undergoes an inter-access network device transfer, or the terminal has transferred from a first access network device to a second access network device;
   a first QoS flow undergoes an inter-access network device transfer, or the first QoS flow has been transferred from the first access network device to the second access network device; and
   the first QoS flow has been established; where
   the third operation includes at least one of the following:
      sending first information through a user plane tunnel corresponding to the first QoS flow;
      sending a QoS notification through the user plane tunnel corresponding to the first QoS flow, or sending a QoS notification corresponding to the first QoS flow;
      sending congestion information through the user plane tunnel corresponding to the first QoS flow, or sending congestion information corresponding to the first QoS flow;
      sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
      sending information indicating one of the following through the user plane tunnel corresponding to the first QoS flow: not performing congestion marking on data packets, the number or a percentage of data packets required to be marked for congestion being a minimum value, and performing congestion marking on zero data packets or zero percent of data packets.

According to a fourth aspect, an information interaction apparatus is provided, including:
a processing module, configured to perform a first operation, including at least one of the following:
in a case that a first condition is met, the first communication device performs a first sub-operation;
the first communication device obtains fourth information, and the first communication device performs a second sub-operation based on the fourth information;
the first communication device receives a QoS notification corresponding to a first data flow from a second communication device, and the first communication device sends a QoS notification corresponding to a first QoS flow or the first data flow based on the obtained QoS notification corresponding to the first data flow; and
the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow.

The first condition being met includes at least one of the following:
a terminal undergoes an inter-access network device transfer, or the terminal has transferred from a first access network device to a second access network device;
the first quality of service QoS flow undergoes an inter-access network device transfer, or the first QoS flow has been transferred from the first access network device to the second access network device;
a QoS flow bound to the first data flow has changed, or the QoS flow bound to the first data flow has changed from a second QoS flow to the first QoS flow;
the first QoS flow has been established, and the second QoS flow has been released, or resources of the second QoS flow have been released;
a second endpoint corresponding to a tunnel of the terminal has changed, a second endpoint corresponding to the first QoS flow has changed, and/or a second endpoint corresponding to the first data flow has changed;
access network device side information for the tunnel of the terminal has changed, or access network device side information corresponding to the first QoS flow has changed, and/or access network device side information corresponding to the first data flow has changed;
third information has been obtained, where the third information includes information used to indicate at least one of the following: the terminal undergoes an inter-access network device transfer; the first QoS flow undergoes an inter-access network device transfer; the terminal has transferred from the first access network device to the second access network device; the first QoS flow has been transferred from the first access network device to the second access network device; the QoS flow bound to the first data flow has changed; the QoS flow bound to the first data flow has changed from the second QoS flow to the first QoS flow; and the first QoS flow has been established, and the second QoS flow has been released, or resources of the second QoS flow have been released;
information about a second endpoint has been obtained, including at least one of the following: information about the second endpoint corresponding to the tunnel of the terminal, information about the second endpoint corresponding to the first QoS flow, and information about the second endpoint corresponding to the first data flow; and
access network device side information has been obtained, including at least one of the following: access network device side information of the tunnel of the terminal, access network device side information corresponding to the first QoS flow, and access network device side information corresponding to the first data flow.

The second endpoint corresponding to the first QoS flow is one of the following: a target endpoint sending traffic of the first QoS flow, and a source endpoint receiving traffic of the first QoS flow.

The first sub-operation includes at least one of the following:
determining that QoS of the first QoS flow can be guaranteed; and determining that GFBR of the first QoS flow can be guaranteed;
interpreting at least one of the obtaining third information, obtaining information about the second endpoint, and/or obtaining access network device side information as obtaining a QoS notification corresponding to the first QoS flow, where the QoS notification corresponding to the first QoS flow includes one of the following: QoS can be guaranteed, and GFBR can be guaranteed;
determining that the first QoS flow has no congestion;
determining not to perform congestion marking on data packets of the first QoS flow;
determining that congestion information of the first QoS flow is information used to indicate one of the following: no congestion, a congestion situation being a minimum value, a percentage of congestion situation being a minimum value, and the congestion situation being zero or the percentage of congestion situation being zero;
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no congestion, a congestion situation being a minimum value, a corresponding percentage of the congestion situation being a minimum value, and the congestion situation being zero or the corresponding percentage of the congestion situation being zero;
determining that the congestion information of the first QoS flow is information used to indicate one of the following: not performing congestion marking on data packets, the number or a percentage of data packets required to be marked for congestion being a minimum value, and performing congestion marking on zero data packets or zero percent of data packets; and
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no longer performing congestion marking on data packets, the number of data packets required to be marked for congestion being a minimum value, performing congestion marking on zero data packets or zero percent of data packets.

The second sub-operation includes at least one of the following:
sending a QoS notification corresponding to the first QoS flow or the first data flow; and
sending congestion information corresponding to the first QoS flow or the first data flow.

According to a fifth aspect, an information interaction apparatus is provided, including:
a processing module, configured to perform a second operation, where
the second operation includes at least one of the following:
   sending third information to a first communication device, where the third information includes information used to indicate at least one of the following: a terminal undergoes an inter-access network device transfer; a first QoS flow undergoes an inter-access network device transfer; the terminal has transferred from a first access network device to a second access network device; the first QoS flow has been transferred from the first access network device to the second access network device; a QoS flow bound to a first data flow has changed; the QoS flow bound to the first data flow has changed from a second QoS flow to the first QoS flow; and the first QoS flow has been established, and the second QoS flow has been released, or resources of the second QoS flow have been released;
   sending fourth information to the first communication device, where the fourth information includes at least one of the following: congestion information corresponding to the first data flow or the second QoS flow, and a QoS notification corresponding to the first data flow or the second QoS flow;
   sending a QoS notification corresponding to the first data flow to the first communication device;
   sending the congestion information corresponding to the first data flow to the first communication device;
   sending information about a second endpoint to the first communication device, including at least one of the following: information about a second endpoint corresponding to a tunnel of the terminal, information about a second endpoint corresponding to the first QoS flow, and information about a second endpoint corresponding to the first data flow;
   sending access network device side information to the first communication device, including at least one of the following: access network device side information of the tunnel of the terminal, access network device side information corresponding to the first QoS flow, and access network device side information corresponding to the first data flow; and
   triggering an N4 modification process.

According to a sixth aspect, an information interaction apparatus is provided, including:
a processing module, configured to perform a third operation in a case that a third condition is met; where
the third condition includes at least one of the following:
   a terminal undergoes an inter-access network device transfer, or the terminal has transferred from a first access network device to a second access network device;
   a first QoS flow undergoes an inter-access network device transfer, or the first QoS flow has been transferred from the first access network device to the second access network device; and
   the first QoS flow has been established; where
   the third operation includes at least one of the following:
      sending first information through a user plane tunnel corresponding to the first QoS flow;
      sending a QoS notification through the user plane tunnel corresponding to the first QoS flow, or sending a QoS notification corresponding to the first QoS flow;
      sending congestion information through the user plane tunnel corresponding to the first QoS flow, or sending congestion information corresponding to the first QoS flow;
      sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
      sending information indicating one of the following through the user plane tunnel corresponding to the first QoS flow: not performing congestion marking on data packets, the number or a percentage of data packets required to be marked for congestion being a minimum value, and performing congestion marking on zero data packets or zero percent of data packets.

According to a seventh aspect, a first communication device is provided, where the first communication device includes a processor and a memory, where a program or instructions capable of executing on the processor are stored in the memory, and when the program or the instructions are executed by the processor, the steps of the method according to the first aspect are implemented.

According to an eighth aspect, a first communication device is provided, including a processor and a communication interface, where the processor is configured to perform a first operation, including at least one of the following:
in a case that a first condition is met, the first communication device performs a first sub-operation;
the first communication device obtains fourth information, and the first communication device performs a second sub-operation based on the fourth information;
the first communication device receives a QoS notification corresponding to a first data flow from a second communication device, and the first communication device sends a QoS notification corresponding to a first QoS flow or the first data flow based on the obtained QoS notification corresponding to the first data flow; and
the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow.

The first condition being met includes at least one of the following:
a terminal undergoes an inter-access network device transfer, or the terminal has transferred from a first access network device to a second access network device;
the first quality of service QoS flow undergoes an inter-access network device transfer, or the first QoS flow has been transferred from the first access network device to the second access network device;
a QoS flow bound to the first data flow has changed, or the QoS flow bound to the first data flow has changed from a second QoS flow to the first QoS flow;
the first QoS flow has been established, and the second QoS flow has been released, or resources of the second QoS flow have been released;
a second endpoint corresponding to a tunnel of the terminal has changed, a second endpoint corresponding to the first QoS flow has changed, and/or a second endpoint corresponding to the first data flow has changed;
access network device side information for the tunnel of the terminal has changed, or access network device side information corresponding to the first QoS flow has changed, and/or access network device side information corresponding to the first data flow has changed;
third information has been obtained, where the third information includes information used to indicate at least one of the following: the terminal undergoes an inter-access network device transfer; the first QoS flow undergoes an inter-access network device transfer; the terminal has transferred from the first access network device to the second access network device; the first QoS flow has been transferred from the first access network device to the second access network device; the QoS flow bound to the first data flow has changed; the QoS flow bound to the first data flow has changed from the second QoS flow to the first QoS flow; and the first QoS flow has been established, and the second QoS flow has been released, or resources of the second QoS flow have been released;
information about a second endpoint has been obtained, including at least one of the following: information about the second endpoint corresponding to the tunnel of the terminal, information about the second endpoint corresponding to the first QoS flow, and information about the second endpoint corresponding to the first data flow; and
access network device side information has been obtained, including at least one of the following: access network device side information of the tunnel of the terminal, access network device side information corresponding to the first QoS flow, and access network device side information corresponding to the first data flow.

The second endpoint corresponding to the first QoS flow is one of the following: a target endpoint sending traffic of the first QoS flow, and a source endpoint receiving traffic of the first QoS flow.

The first sub-operation includes at least one of the following:
determining that QoS of the first QoS flow can be guaranteed; and determining that GFBR of the first QoS flow can be guaranteed;
interpreting at least one of the obtaining third information, obtaining information about the second endpoint, and/or obtaining access network device side information as obtaining a QoS notification corresponding to the first QoS flow, where the QoS notification corresponding to the first QoS flow includes one of the following: QoS can be guaranteed, and GFBR can be guaranteed;
determining that the first QoS flow has no congestion;
determining not to perform congestion marking on data packets of the first QoS flow;
determining that congestion information of the first QoS flow is information used to indicate one of the following: no congestion, a congestion situation being a minimum value, a percentage of congestion situation being a minimum value, and the congestion situation being zero or the percentage of congestion situation being zero;
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no congestion, a congestion situation being a minimum value, a corresponding percentage of the congestion situation being a minimum value, and the congestion situation being zero or the corresponding percentage of the congestion situation being zero;
determining that the congestion information of the first QoS flow is information used to indicate one of the following: not performing congestion marking on data packets, the number or a percentage of data packets required to be marked for congestion being a minimum value, and performing congestion marking on zero data packets or zero percent of data packets; and
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no longer performing congestion marking on data packets, the number of data packets required to be marked for congestion being a minimum value, performing congestion marking on zero data packets or zero percent of data packets.

The second sub-operation includes at least one of the following:
sending a QoS notification corresponding to the first QoS flow or the first data flow; and
sending congestion information corresponding to the first QoS flow or the first data flow.

According to a ninth aspect, a second communication device is provided, where the second communication device includes a processor and a memory, where a program or instructions capable of running executing on the processor are stored in the memory, and when the program or the instructions are executed by the processor, the steps of the method according to the second aspect are implemented.

According to a tenth aspect, a second communication device is provided, including a processor and a communication interface, where the processor is configured to perform a second operation; where
the second operation includes at least one of the following:
sending third information to a first communication device, where the third information includes information used to indicate at least one of the following: a terminal undergoes an inter-access network device transfer; a first QoS flow undergoes an inter-access network device transfer; the terminal has transferred from a first access network device to a second access network device; the first QoS flow has been transferred from the first access network device to the second access network device; a QoS flow bound to a first data flow has changed; the QoS flow bound to the first data flow has changed from a second QoS flow to the first QoS flow; and the first QoS flow has been established, and the second QoS flow has been released, or resources of the second QoS flow have been released;
sending fourth information to the first communication device, where the fourth information includes at least one of the following: congestion information corresponding to the first data flow or the second QoS flow, and a QoS notification corresponding to the first data flow or the second QoS flow;
sending a QoS notification corresponding to the first data flow to the first communication device;
sending the congestion information corresponding to the first data flow to the first communication device;
sending information about a second endpoint to the first communication device, including at least one of the following: information about a second endpoint corresponding to a tunnel of the terminal, information about a second endpoint corresponding to the first QoS flow, and information about a second endpoint corresponding to the first data flow;
sending access network device side information to the first communication device, including at least one of the following: access network device side information of the tunnel of the terminal, access network device side information corresponding to the first QoS flow, and access network device side information corresponding to the first data flow; and
triggering an N4 modification process.

According to an eleventh aspect, a third communication device is provided, where the third communication device includes a processor and a memory, where a program or instructions capable of running executing on the processor are stored in the memory, and when the program or the instructions are executed by the processor, the steps of the method according to the second aspect are implemented.

According to a twelfth aspect, a third communication device is provided, including a processor and a communication interface, where the processor is configured to perform a third operation in a case that a third condition is satisfied; where
the third condition includes at least one of the following:
a terminal undergoes an inter-access network device transfer, or the terminal has transferred from a first access network device to a second access network device;
a first QoS flow undergoes an inter-access network device transfer, or the first QoS flow has been transferred from the first access network device to the second access network device; and
the first QoS flow has been established; where
the third operation includes at least one of the following:
   sending first information through a user plane tunnel corresponding to the first QoS flow;
   sending a QoS notification through the user plane tunnel corresponding to the first QoS flow, or sending a QoS notification corresponding to the first QoS flow;
   sending congestion information through the user plane tunnel corresponding to the first QoS flow, or sending congestion information corresponding to the first QoS flow;
   sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
   sending information indicating one of the following through the user plane tunnel corresponding to the first QoS flow: not performing congestion marking on data packets, the number or a percentage of data packets required to be marked for congestion being a minimum value, and performing congestion marking on zero data packets or zero percent of data packets.

According to a thirteenth aspect, a communication system is provided, including a first communication device, a second communication device, and a third communication device, where the first communication device can be configured to execute the steps of the information interaction method according to the first aspect, the second communication device can be configured to execute the steps of the information interaction method according to the second aspect, and the third communication device can be configured to execute the steps of the information interaction method according to the third aspect.

According to a fourteenth aspect, a readable storage medium is provided, where the readable storage medium stores a program or instructions, and when the program or instructions are executed by the processor, the steps of the method according to the first aspect are implemented, or the steps of the method according to the second aspect are implemented, or the steps of the method according to the third aspect are implemented.

According to a fifteenth aspect, a chip is provided, where the chip includes a processor and a communication interface, the communication interface is coupled to the processor, and the processor is configured to run a program or instructions to implement the method according to the first aspect, or the method according to the second aspect, or the method according to the third aspect.

According to a sixteenth aspect, a computer program/program product is provided, where the computer program/program product is stored in a storage medium, and the computer program/program product is executed by at least one processor to implement the steps of the information interaction method according to the first aspect to the third aspect.

In the embodiments of this application, the first communication device performs a first operation, including at least one of the following: in a case that a first condition is met, the first communication device performs a first sub-operation; the first communication device obtains fourth information, and the first communication device performs a second sub-operation based on the fourth information; the first communication device receives a QoS notification corresponding to a first data flow from a second communication device, and the first communication device sends a QoS notification corresponding to a first QoS flow or the first data flow based on the obtained QoS notification corresponding to the first data flow; and the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow. In this way, information interaction between network-side devices can be implemented in a case that a serving device (for example, an access network device) is changed for a QoS flow or a QoS flow is changed for a data flow, and the network-side devices can obtain changed information.

### BRIEF DESCRIPTION OF DRAWINGS

Other advantages and benefits will become apparent to those of ordinary skill in the art by reading detailed description of the exemplary embodiments below. The accompanying drawings are merely intended to illustrate the purposes of the preferred implementations, and should not be construed as a limitation on this application. Throughout the accompanying drawings, the same reference numerals represent the same components. In the accompanying drawings:
FIG. 1A is a first schematic diagram of an application scenario according to an embodiment of this application;
FIG. 1B is a second schematic diagram of an application scenario according to an embodiment of this application;
FIG. 1C is a third schematic diagram of an application scenario according to an embodiment of this application;
FIG. 1D is a fourth schematic diagram of an application scenario according to an embodiment of this application;
FIG. 1E is a fifth schematic diagram of an application scenario according to an embodiment of this application;
FIG. 1F is a sixth schematic diagram of an application scenario according to an embodiment of this application;
FIG. 2 is a schematic architectural diagram of a wireless communication system according to an embodiment of this application;
FIG. 3 is a first schematic flowchart of an information interaction method according to an embodiment of this application;
FIG. 4 is a second schematic flowchart of an information interaction method according to an embodiment of this application;
FIG. 5 is a third schematic flowchart of an information interaction method according to an embodiment of this application;
FIG. 6A is a first schematic interaction flowchart of an information interaction method according to an embodiment of this application;
FIG. 6B is a second schematic interaction flowchart of an information interaction method according to an embodiment of this application;
FIG. 7 is a third schematic interaction flowchart of an information interaction method according to an embodiment of this application;
FIG. 8 is a first schematic structural diagram of an information interaction apparatus according to an embodiment of this application;
FIG. 9 is a second schematic structural diagram of an information interaction apparatus according to an embodiment of this application;
FIG. 10 is a third schematic structural diagram of an information interaction apparatus according to an embodiment of this application;
FIG. 11 is a schematic structural diagram of a communication device according to an embodiment of this application;
FIG. 12 is a first schematic structural diagram of a network-side device according to an embodiment of this application; and
FIG. 13 is a second schematic structural diagram of a network-side device according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

In the specification and claims of this application, the term "include" and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

In the embodiments of this application, the word such as "an example" or "for example" is used to represent giving an example, an instance, or an illustration. Any embodiment or design solution described as "an example" or "for example" in the embodiments of this application shall not be interpreted to be more preferential or advantageous than other embodiments or design solutions. To be precise, the terms such as "an example" or "for example" are intended to present a related concept in a specific manner.

Technologies described in this specification are not limited to a 5th-generation mobile communication technology (5th-generation, 5G) system, a later evolved communication system, and an LTE/LTE advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems.

The terms "system" and "network" are usually used interchangeably. The CDMA system can implement radio technologies such as CDMA2000 and Universal Terrestrial Radio Access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communications (Global System for Mobile Communication, GSM). The OFDMA system can implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. The UTRA and E-UTRA are parts of the universal mobile telecommunication system (Universal Mobile Telecommunications System, UMTS). The LTE and more advanced LTE (such as LTE-A) are new UMTS releases that use the E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). Techniques described in this specification may be used in the aforementioned systems and radio technologies, and can also be used in other systems and radio technologies. In the following descriptions, a new radio (New Radio, NR) system is described for an illustration purpose, and NR terms are used in most of the following descriptions, although these technologies may also be applied to other systems than an NR system application, for example, the 6th generation (6^{th} Generation, 6G) communication system.

For better understanding the embodiments of this application, the following technical points are first described. Currently, a RAN can disclose congestion information (for example, percentage) of a QoS flow, a QoS notification (for example, GFBR cannot be guaranteed, or GFBR can be guaranteed again), and a measured rate through a user plane tunnel.

When a QoS flow is transferred (also referred to as switch) between RAN nodes, the disclosed information may change, for example, from congestion to no congestion, or from "GFBR cannot be guaranteed again" or "GFBR can be guaranteed again". However, a UPF lacks a method to know that a serving RAN node of the QoS flow has changed.

In addition, a QoS flow bound to a traffic flow may also change, and the disclosed information may change accordingly.

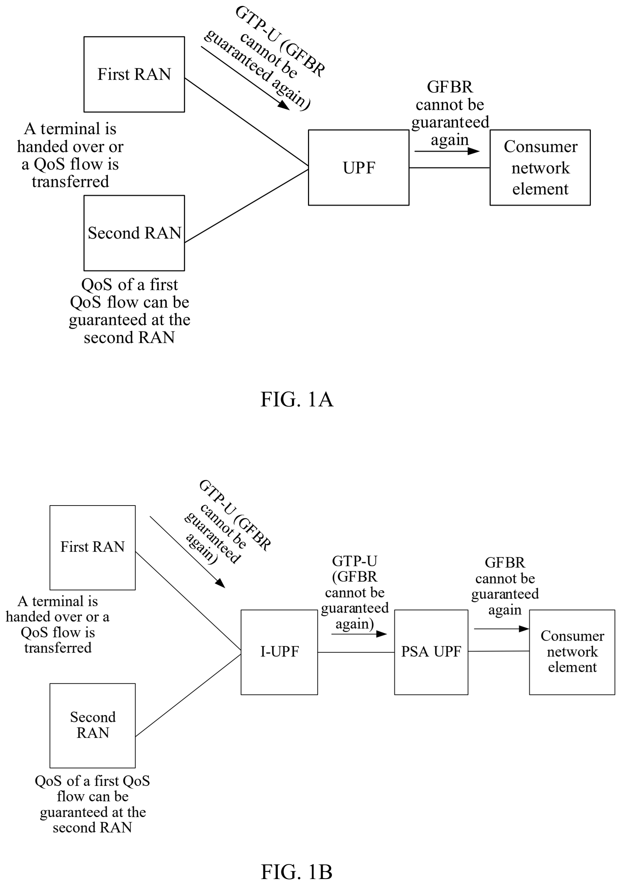

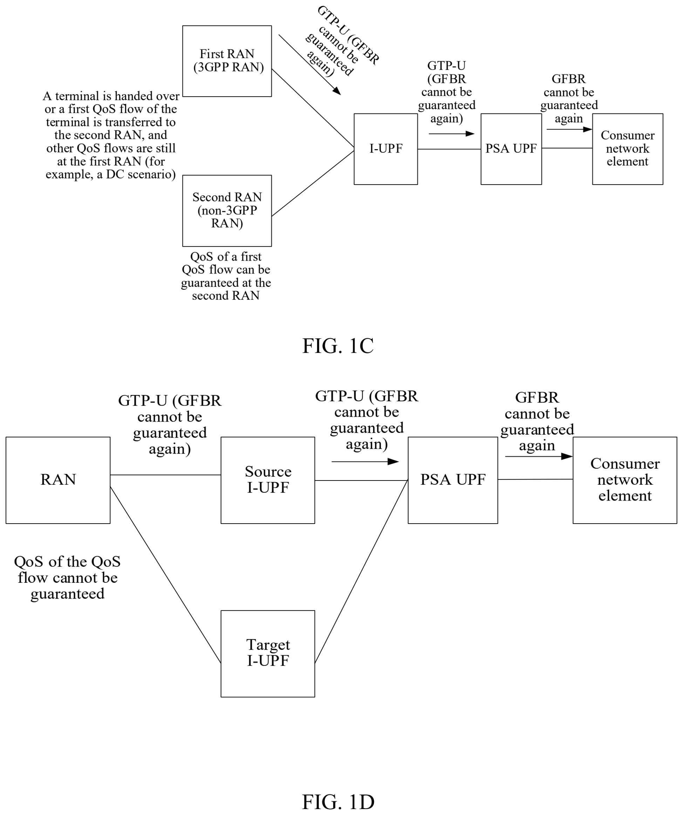

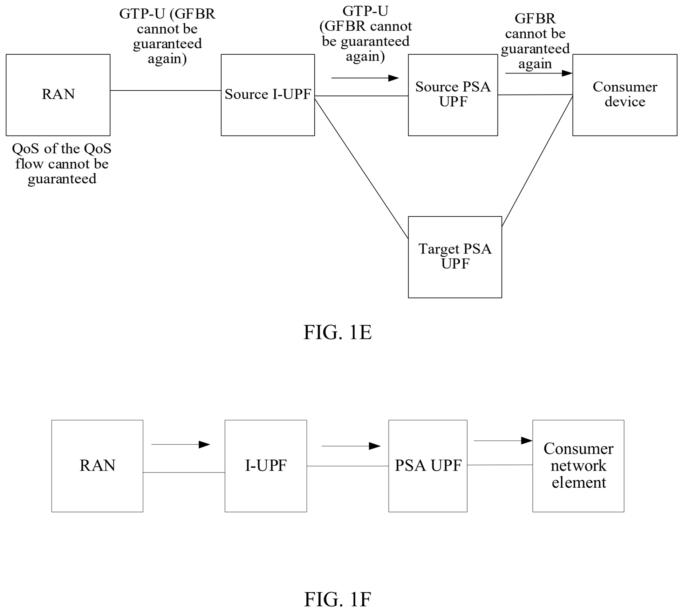

Currently, multiple QoS flow transfer scenarios may exist, as shown in FIGs. 1A, 1B, 1C, 1D, 1E, and 1F, respectively.

As shown in FIG. 1A, the terminal may transfer between access network devices, causing a QoS flow to be transferred between the access network devices. In this case, a tunnel between the RAN and a PSA UPF is directly connected. A second endpoint of a first QoS is on the RAN. The second endpoint of the first QoS changes.

As shown in FIG. 1B, the terminal may transfer between access network devices, causing a QoS flow to be transferred between the access network devices. In this case, the tunnel between the RAN and the PSA UPF is connected through an I-UPF. The second endpoint of the first QoS is on the I-UPF. The second endpoint of the first QoS remains unchanged.

As shown in FIG. 1B, there is also a case that the terminal does not transfer between access network devices, but only a first QoS flow is transferred between the access network devices.

FIG. 1C illustrates 3GPP and non-3GPP scenarios.

As shown in FIG. 1D, the terminal and the first QoS flow are not transferred between access network devices, and an I-UPF is inserted or changed. The second endpoint of the first QoS changes.

As shown in FIG. 1E, the terminal and the first QoS flow are not transferred between access network devices, and the PSA UPF is changed. The second QoS flow is released and the first QoS is established. A second endpoint corresponding to a first data flow is changed.

As shown in FIG. 1F, the terminal and the first QoS flow are not transferred between access network devices, and the PSA UPF remains unchanged. A second endpoint of a QoS flow remains unchanged. A second data flow is changed from a second QoS flow to a first QoS flow. A second endpoint corresponding to a first data flow is changed.

For the above scenarios, the following problems need to be solved:
Problem 1: A source (Source) RAN has notified a UPF of a QNC (for example, GFBR cannot be guaranteed (GFBR cannot be guaranteed)) through a GTP-U tunnel. When the terminal undergoes an inter-RAN handover, a GFBR QoS flow is known to a target RAN (target RAN). How does the UPF know that "GFBR can be guaranteed again"?

In a case that there is only one hop between the RAN and the PSA UPF, as shown in FIG. 1A, the PSA UPF can determine occurrence of a handover by detecting a change in a target TEID of the GTP-U tunnel (tunnel). However, if there are multiple hops between the RAN and the PSA UPF, as shown in FIG. 1B, the PSA UPF cannot determine a handover by detecting a change in the target TEID of the GTP-U tunnel. Therefore, the UPF cannot automatically determine that the QoS flow has changed from "GFBR cannot be guaranteed" to "GFBR can be guaranteed again".
(1) One solution is as follows:
   Step 1: An SMF informs the UPF of an inter-RAN HO event (Inter RAN HO event) of a first QoS flow.
   Step 2: In a case that UE meets a first condition (for example, undergoing an inter-RAN network element handover, with resources of the QoS flow not released), the UPF performs at least one of the following: determining occurrence of "GFBR can be guaranteed again" of the QoS flow, and disclosing "GFBR can be guaranteed again" to a target device consumer subscribing to the event.
   The UPF determines that the UE has performed an inter-RAN network element handover based on at least one of the following: inter RAN HO event is received from the SMF, and the target TEID of the GTP-U tunnel changes.
(2) Another solution is as follows: in a case of an inter-RAN transfer of the first QoS flow, the SMF determines "GFBR can be guaranteed again" or "GFBR can no longer be guaranteed" and sends a corresponding QoS notification to the UPF.
(3) Another solution is as follows: "GFBR can be guaranteed again" is sent through the user plane tunnel in a case that a second RAN accepts a QoS flow establishment request.

Compared with solution (3), solution (1) and solution (2) can reduce interaction between the RAN and the CN.

Problem 2: Regarding congestion information, if a QoS flow is congested at the source RAN, that is, a percentage corresponding to the congestion situation (for example, percentage of congestion level) or a percentage of data packets required to be marked for congestion (percentage of packet to be marked) relative to all data packets reaches, for example, 80%, once the QoS flow is successfully switched to the target RAN, the congestion may be eliminated, or the percentage becomes zero.
(1) One solution is as follows: in a case that the UE meets a first condition, the UPF performs at least one of the following: determining that the first QoS flow has no congestion or a percentage corresponding to the congestion information is 0; disclosing the congestion information percentage=0 to a consumer network element subscribing to the event; and not performing congestion marking on data packets.
(2) Another solution is as follows: in a case that the second RAN accepts a QoS flow establishment request, it sends, through the user plane tunnel, that the first QoS flow has no congestion or a percentage corresponding to the congestion information is 0.

Compared with solution (2), solution (1) can reduce the interaction between the RAN and the CN.

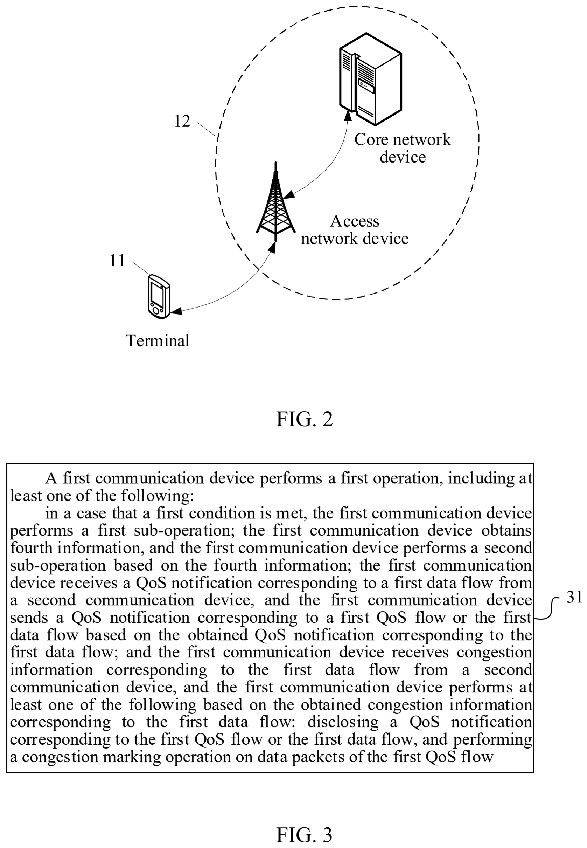

Referring to FIG. 2, FIG. 2 is a schematic architectural diagram of a wireless communication system according to an embodiment of this application.

FIG. 2 is a block diagram of a wireless communication system to which embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a notebook computer, a personal digital assistant (personal digital assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that the terminal 11 is not limited to any specific type in the embodiments of this application. The network-side device 12 may include an access network device or a core network device, where the access network device may also be referred to as a radio access network (Radio Access Network, RAN), a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a Node B (NodeB, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is introduced as an example, and the specific type of the core network device is not limited.

Optionally, obtaining may be understood as acquiring from configuration, receiving, obtaining through receiving upon a request, obtaining through self-learning, obtaining through deduction based on non-received information, or obtaining through processing received information, which may be determined according to actual needs. This is not limited in the embodiments of this application. For example, when specific capability indication information transmitted by a device is not received, it can be deduced that the device does not support the capability.

Optionally, transmitting may include broadcasting, broadcasting through a system message, or returning a response after receiving the request.

In an optional embodiment of this application, the target device or the communication device may include at least one of the following: a communication network element and a terminal.

In an embodiment of this application, the communication network element may include at least one of the following: a core network network element and a radio-access-network network element.

In the embodiments of this application, a core network network element (CN network element) may include, but is not limited to, at least one of the following: a core network device, a core network node, a core network function, a core network network element, a mobility management entity (Mobility Management Entity, MME), an access management function (Access Management Function, AMF), a session management function (Session Management Function, SMF), a user plane function (User Plane Function, UPF), a serving gateway (serving GW, SGW), PDN gateway (PDN Gate Way, PDN), a policy control function (Policy Control Function, PCF), a policy and charging rules function (Policy and Charging Rules Function, PCRF), serving GPRS support node (Serving GPRS Support Node, SGSN), a gateway GPRS support node (Gateway GPRS Support Node, GGSN), and an application function (Application Function).

In the embodiments of this application, a radio access network device or a RAN network element may include, but is not limited to, at least one of the following: a radio access networks device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access-point (Access Point, AP) device, a wireless local area network (Wireless Local Area Networks, WLAN) node, or an N3IWF. The access network device includes one of the following: a 3GPP access network device (such as a RAN network element (such as a base station)) and a non-3GPP access network device.

A base station may be a base transceiver station (BTS, Base Transceiver Station) in GSM or CDMA, or may be a NodeB (NodeB) in WCDMA, or may be an evolved NodeB (eNB or e-Node B, evolutional Node B) in LTE or a 5G NodeB (gNB), which is not limited in the embodiments of this application.

In an optional embodiment of this application, UE may include one of the following: a terminal device, a terminal device and a card, and a card.

In an optional embodiment of this application, the card may include one of the following: a subscriber identity module (Subscriber Identity Module, SIM) card, a USIM card, and an eSIM.

In an optional embodiment of this application, the terminal may include a relay supporting the terminal function and/or a terminal supporting the relay function. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or vehicle user equipment. It should be noted that a specific type of the terminal is not limited in the embodiments of this application.

Transfer may be referred to as handover, for example, the terminal performs a transfer between access network devices may be referred to as the terminal performs a handover between access network devices. For example, inter-access network device transfer of the first QoS flow can be referred to as inter-access network device switch of the first QoS flow.

That QoS can be guaranteed includes: QoS can be guaranteed again. For example, that GFBR can be guaranteed includes that GFBR can be guaranteed again.

The congestion situation can be denoted by percentage, and the congestion situation being a minimum value can be represented by a percentage of congestion situation being a minimum value. It is easy to understand that different percentages can represent different levels of congestion situations. The minimum value of percentage may be zero.

Data packets required to be marked for congestion can be represented by percentage. Data packets required to be marked for congestion can be represented as that a percentage of data packets required to be marked for congestion relative to all data packets is a minimum value. Generally, the minimum value is zero.

No congestion includes: no more congestion. In an implementation, no congestion corresponds to a congestion situation with a value being zero.

Not congestion marking on data packets includes: no more congestion marking on the data packets.

Not congestion marking on data packets of the first QoS flow includes: no more congestion marking on the data packets of the first QoS flow. For congestion marking, for example, a bit corresponding to an explicit congestion notification (Explicit Congestion Notification, ECN) is set to a corresponding congestion value (for example, CE congestion experienced: 11).

In an embodiment of this application, an endpoint is also referred to as a traffic endpoint (Traffic endpoint).

Fully qualified tunnel end point identifier (Fully Qualified Tunnel End Point Identifier, F-TEID) includes a TEID and address information (such as an IP address) of an endpoint.

The second endpoint is, for example, a linked traffic endpoint (Linked Traffic Endpoint), or a remote GTP-U tunnel endpoint, which is a remote endpoint of the GTP-U tunnel.

Linked Traffic Endpoint ID means (linked traffic endpoint ID).

Traffic endpoint info includes (Traffic Endpoint ID, or corresponding TEID, or the like).

In an embodiment of this application, disclosure, reporting, or report means one of the following: notification or sending.

In an embodiment of this application, monitoring (such as monitor) requirements include at least one of the following: supervision, detection, measurement, and reporting.

In an embodiment of this application, monitoring may also be referred to as at least one of the following: supervision, detection, and measurement.

In an embodiment of this application, requiring disclosure of XX information can be expressed as a subscription request for XX information. Disclosing XX information or disclosure of XX information can represent sending the XX information to a target communication network element (also referred to as consumer) that subscribes to or requests the XX information.

Requiring disclosure of congestion information includes requiring disclosure of congestion situation information (such as congestion level).

In an embodiment of this application, any one piece of information in this application is information corresponding to the first QoS flow or the first data flow.

For example, first congestion information is first congestion information corresponding to the first QoS flow or the first data flow. For example, second congestion information is second congestion information corresponding to the first QoS flow or the first data flow.

For example, third congestion information is third congestion information corresponding to the first QoS flow or the first data flow.

In an embodiment of this application, any one "requirement" in this application is a requirement corresponding to the first QoS flow or the first data flow.

In an embodiment of this application, "data packet" in this application is a data packet corresponding to the first QoS flow or the first data flow.

In an embodiment of this application, "congestion" in this application is congestion corresponding to the first QoS flow or the first data flow.

ECN is a technique that explicitly notifies congestion by performing congestion marking on data packets: when congestion occurs, ECN bits in the data packets are set to 11, indicating congestion experienced CE.

ECN with low latency, low loss, scalable throughput (low latency, low loss, scalable throughput, L4S) means that congestion CE reporting is needed when lighter congestion occurs.

ECN is an extension of TCP/IP protocol and defined in RFC 3168 (2001). ECN supports end-to-end network congestion notification. This is specifically shown in FIG. 3.

In an embodiment of this application, congestion start, congestion in progress, and congestion experienced represent one meaning.

In an embodiment of this application, congestion end, no congestion, and no congestion experienced represent one meaning.

In an embodiment of this application, congestion may be a case that network transmission performance is reduced due to limited resources of transmission nodes when the number of packets transmitted in the packet-switched network is too large. When congestion occurs, data loss, increased delay, and reduced throughput typically occur, and in severe cases, it may lead to congestion collapse (congestion collapse).

In an embodiment of this application, congestion situation information may be information indicating a congestion situation such as congestion start, congestion end, congestion level, or congestion direction.

In an optional embodiment of this application, congestion monitoring may include at least one of the following: congestion situation monitoring, congestion situation measurement, and/or congestion situation reporting. The congestion situation includes at least one of the following: congestion start or congestion experienced, congestion end or no congestion, congestion degrading, and congestion escalating.

In an optional embodiment of this application, congestion of a first object is congestion of data transmission in the first object.

In an optional embodiment of this application, congestion situation information of the first object is congestion situation information of data transmission in the first object.

In an optional embodiment of this application, congestion of the first object includes one of the following: QoS of the first object cannot be met, a data sending rate of the first object is less than a data receiving rate of the first object, time-frequency resources are insufficient, a buffer overflows, and a queue overflows.

In an implementation, the time-frequency resources are insufficient, for example, time-frequency resources of a first cell are insufficient to transmit all received data or buffered data.

In an implementation, the first object may be a first data radio bearer (Data Radio Bearer, DRB), and congestion of the first DRB includes one of the following: QoS of the first DRB cannot be met, and a data sending rate of the first DRB is less than a data receiving rate of the first object. QoS cannot be met, for example, a rate cannot be guaranteed, a packet loss rate cannot be guaranteed, a packet loss ratio cannot be guaranteed, and a PER cannot be guaranteed.

In an implementation, the data sending rate of the first object being less than the data receiving rate of the first object includes that the data sending rate of the first object for transmission to a first interface is less than the data sending rate of the first object for reception from a second interface. The first interface or the second interface includes one of the following: Uu interface, N9 or N3 interface, and N6 interface.

When the first interface is a Uu interface, the second interface may be an N3 interface.

When the first interface is an N3 interface, the second interface may be a Uu interface.

When the first interface is an N6 interface, the second interface may be an N3 or N9 interface.

When the first interface is an N3 or N9 interface, the second interface may be an N6 interface.

In an optional embodiment of this application, the QoS includes at least one of the following: guaranteed bit rate (such as guaranteed flow bit rate (Guaranteed Flow Bit Rate, GFBR)), minimum transmission rate (such as minimum flow bit rate), packet error rate (Packet Error Rate, PER), packet loss rate, transmission delay budget, and buffer delay budget.

That QoS cannot be met includes at least one of the following: the guaranteed flow bit rate cannot be guaranteed (for example, an actual transmission rate is lower than the guaranteed flow bit rate), the minimum transmission rate cannot be met (for example, an actual minimum transmission rate is lower than the minimum transmission rate), the packet error rate cannot be met (for example, an actual packet error rate is higher than the packet error rate in QoS), the packet loss rate cannot be met (for example, an actual packet loss rate is higher than the packet loss rate in QoS), the transmission delay budget cannot be met (for example, an actual transmission delay overhead is greater than the transmission delay budget), and the buffer delay budget cannot be met (for example, an actual buffer delay overhead of the data is greater than the buffer delay budget)

In an optional embodiment of this application, the data packet includes a protocol data unit (Protocol Data Unit, PDU) packet data unit.

In an optional embodiment of this application, a QoS flow with a corresponding congestion monitoring requirement refers to receiving a congestion monitoring requirement corresponding to the QoS flow. If the congestion monitoring requirement corresponding to the QoS flow is not obtained, it can be considered that the QoS flow does not have the corresponding congestion monitoring requirement. The same holds true for data flows with corresponding congestion monitoring requirements.

In an optional embodiment of this application, the data flow is an abbreviation of the traffic data flow.

In an optional embodiment of this application, the tunnel includes at least one of the following: session (session) (such as PDU session or session between RAN and CN), GTP-U, tunnel between RAN and CN, QoS flow, QoS subflow, evolved packet system (Evolved Packet System, EPS) bearer, PDP context, DRB, signalling radio bearer (Signalling Radio Bearer, SRB), logical channel, IPsec association, and GPRS tunnelling protocol (GPRS Tunnelling Protocol, GTP) tunnel (tunnel). The tunnel can be instantiated as any one of the above types of tunnels.

In an embodiment of this application, the NG interface may also be referred to as S1 interface or N2 interface, and the naming is not limited.

In an optional embodiment of this application, the tunnel may include at least one of the following: PDU session, GTP-U (point-to-point tunneling protocol GTP-U tunnel), quality of service (Quality of Service, QoS) flow, evolved packet system (Evolved Packet System, EPS) bearer, PDP context, DRB, SRB, and Internet protocol security (Internet Protocol Security, IPsec) association.

In an embodiment of this application, the NG interface may also be referred to as an S1 interface or an N2 interface, and the naming is not limited.

In an embodiment of this application, the wireless communication network may be at least one of the following: a public network or a non-public network; or the first network may be a non-public network.

In an embodiment of this application, the non-public network is an abbreviation of non public network. The non-public network may be referred to as one of the following: a non-public communication network. The non-public network may include at least one of the following deployment manners: a physical non-public network, a virtual non-public network, and a non-public network implemented on a public network. In an implementation, the non-public network is a closed access group (Closed Access Group, CAG). A CAG may include a group of terminals.

In an embodiment of this application, the non-public network may include or be referred to as a private network. The private network may be referred to one of the following: a private communication network, a private network, a local area network (LAN), a private virtual network (PVN), an isolated communication network, a dedicated communication network, or other names. It should be noted that the naming manner is not specifically limited in the embodiments of this application.

In an embodiment of this application, a public network is an abbreviation of public network. The public network may be referred to as one of the following: a public communication network or other names. It should be noted that the naming manner is not specifically limited in the embodiments of this application.

In an embodiment of this application, a data packet size may be referred to as a data packet length.

In an embodiment of this application, a data packet may be referred to as a data frame.

The following describes the information interaction method in the embodiments of this application.

Referring to FIG. 3, an embodiment of this application provides an information interaction method, applied to a first communication device. The first communication device includes, but is not limited to, a CN network element (such as a UPF or an SMF), and the CN network element may be referred to as a first CN network element. The method includes:

Step 31: The first communication device performs a first operation, including at least one of the following:
in a case that a first condition is met, the first communication device performs a first sub-operation;
the first communication device obtains fourth information, and the first communication device performs a second sub-operation based on the fourth information;
the first communication device receives a QoS notification corresponding to a first data flow from a second communication device, and the first communication device sends a QoS notification corresponding to a first QoS flow or the first data flow based on the obtained QoS notification corresponding to the first data flow; and
the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow.

The first condition being met includes at least one of the following:
a terminal undergoes an inter-access network device transfer, or the terminal has transferred from a first access network device to a second access network device;
the first quality of service QoS flow undergoes an inter-access network device transfer, or the first QoS flow has been transferred from the first access network device to the second access network device;
a QoS flow bound to the first data flow has changed, or the QoS flow bound to the first data flow has changed from a second QoS flow to the first QoS flow;
the first QoS flow has been established, and the second QoS flow has been released, or resources of the second QoS flow have been released;
a second endpoint corresponding to a tunnel of the terminal has changed, a second endpoint corresponding to the first QoS flow has changed, and/or a second endpoint corresponding to the first data flow has changed;
access network device side information for the tunnel of the terminal has changed, or access network device side information corresponding to the first QoS flow has changed, and/or access network device side information corresponding to the first data flow has changed;
third information has been obtained, where the third information includes information used to indicate at least one of the following: the terminal undergoes an inter-access network device transfer; the first QoS flow undergoes an inter-access network device transfer; the terminal has transferred from the first access network device to the second access network device; the first QoS flow has been transferred from the first access network device to the second access network device; the QoS flow bound to the first data flow has changed; the QoS flow bound to the first data flow has changed from the second QoS flow to the first QoS flow; and the first QoS flow has been established, and the second QoS flow has been released, or resources of the second QoS flow have been released;
information about a second endpoint has been obtained, including at least one of the following: information about the second endpoint corresponding to the tunnel of the terminal, information about the second endpoint corresponding to the first QoS flow, and information about the second endpoint corresponding to the first data flow; and
access network device side information has been obtained, including at least one of the following: access network device side information of the tunnel of the terminal, access network device side information corresponding to the first QoS flow, and access network device side information corresponding to the first data flow.

The second endpoint corresponding to the first QoS flow is one of the following: a target endpoint sending traffic of the first QoS flow, and a source endpoint receiving traffic of the first QoS flow.

The first sub-operation includes at least one of the following:
determining that QoS of the first QoS flow can be guaranteed; and determining that GFBR of the first QoS flow can be guaranteed;
interpreting at least one of the obtaining third information, obtaining information about the second endpoint, and/or obtaining access network device side information as obtaining a QoS notification corresponding to the first QoS flow, where the QoS notification corresponding to the first QoS flow includes one of the following: QoS can be guaranteed, and GFBR can be guaranteed;
determining that the first QoS flow has no congestion;
determining not to perform congestion marking on data packets of the first QoS flow;
determining that congestion information of the first QoS flow is information used to indicate one of the following: no congestion, a congestion situation being a minimum value, a percentage of congestion situation being a minimum value, and the congestion situation being zero or the percentage of congestion situation being zero;
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no congestion, a congestion situation being a minimum value, a corresponding percentage of the congestion situation being a minimum value, and the congestion situation being zero or the corresponding percentage of the congestion situation being zero;
determining that the congestion information of the first QoS flow is information used to indicate one of the following: not performing congestion marking on data packets, the number or a percentage of data packets required to be marked for congestion being a minimum value, and performing congestion marking on zero data packets or zero percent of data packets; and
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no longer performing congestion marking on data packets, the number of data packets required to be marked for congestion being a minimum value, performing congestion marking on zero data packets or zero percent of data packets.

The second sub-operation includes at least one of the following:
sending a QoS notification corresponding to the first QoS flow or the first data flow; and
sending congestion information corresponding to the first QoS flow or the first data flow.

In an implementation, information used for indicating transfer of the first QoS flow between access network devices is, for example, information of the transferred QoS flow, and the transferred QoS flow includes the first QoS flow.

Optionally, the first communication device includes a UPF (such as an anchor gateway, that is, a gateway that terminates an N6 interface).

Optionally, the first communication device obtains at least one of the following from the second communication device (such as the SMF): the third information, the fourth information, the QoS notification corresponding to the first data flow, the congestion information corresponding to the first data flow, the information about the second endpoint, and the access network device side information.

Optionally, the access network device includes one of the following: a 3GPP access network device (such as a RAN network element (for example, a base stations)) and a non-3GPP access network device.

That QoS can be guaranteed includes: QoS can be guaranteed again. For example, that GFBR can be guaranteed includes that GFBR can be guaranteed again.

The congestion situation can be denoted by percentage, and the congestion situation being a minimum value can be denoted by the percentage corresponding to the congestion situation being a minimum value. It is easy to understand that different percentages can represent different levels of congestion situations. The minimum value of percentage may be zero.

Data packets required to be marked for congestion can be represented by percentage. Data packets required to be marked for congestion can be represented as that a percentage of data packets required to be marked for congestion relative to all data packets is a minimum value. Generally, the minimum value is zero.

No congestion includes: no more congestion. In an implementation, no congestion corresponds to a congestion situation with a value being zero.

Not congestion marking on data packets includes: no more congestion marking on the data packets.

Not congestion marking on data packets of the first QoS flow includes: no more congestion marking on the data packets of the first QoS flow. For congestion marking, for example, a bit corresponding to an ECN is set to a corresponding congestion value (for example, CE congestion experienced: 11).

Optionally, determining by the first communication device that the first condition is met includes at least one of the following cases: information indicating that the first condition is met has been received.

Optionally, in a first implementation, as shown in FIG. 1A, when the terminal transfers between the access network devices, the QoS flow is also transferred between the access network devices or is released.

In another implementation, when the QoS flow is transferred between the access network devices, the terminal may not transfer between the access network devices.

In an implementation, that the QoS of QoS flow can be guaranteed means at least one of the following: GFBR can be guaranteed, GFER can be guaranteed, PER can be guaranteed, PDB can be guaranteed, PSER can be guaranteed, PSER cannot be guaranteed, PSDB can be guaranteed, PER can be guaranteed, and the like. In an implementation, QoS can be guaranteed, which is reflected by a QoS notification that GFBR can be guaranteed. For example, PER can be guaranteed, which is reflected by sending a QoS notification that GEBR can be guaranteed. QoS cannot be guaranteed, which is reflected by a QoS notification that GFBR cannot be guaranteed.

A tunnel is established between the first communication device (such as a PSA UPF) and a fourth communication device (such as an I-UPF or third communication device (such as a RAN)). For the tunnel (such as GTP-U), a first endpoint is established at the first communication device (which can be referred to as a local endpoint from the perspective of the first communication device) and a second endpoint is established at the fourth communication device (which can be referred to as a remote endpoint or a peer endpoint or a fourth communication device side endpoint from the perspective of the first communication device). There may be multiple tunnels between the first communication device and the fourth communication device. The first communication device establishes a tunnel separately with a plurality of fourth communication devices. Therefore, in a case that the first communication device wants to send traffic of the first QoS flow, it needs to specify a second endpoint.

From the perspective of the first QoS flow, the traffic of the first QoS flow is sent between the first endpoint in the first communication device and the second endpoint in the fourth communication device.

Therefore, the second endpoint needs to be specified for the traffic of the first QoS flow sent from the first communication device to the fourth communication device. In an implementation, the second endpoint corresponding to the first QoS flow may be a target endpoint that sends the traffic of the first QoS flow. A first endpoint also needs to be specified for the traffic of the first QoS flow sent from the fourth communication device to the first communication device. Therefore, in another implementation, from the perspective of the first communication device, the second endpoint corresponding to the first QoS flow may be a source endpoint that receives the traffic of the first QoS flow.

A target endpoint sending the traffic of the first QoS flow includes a target endpoint (such as an endpoint at the fourth communication device) sending downlink traffic of the first QoS flow.

A source endpoint receiving the traffic of the first QoS flow includes a source endpoint (such as an endpoint at the fourth communication device) receiving uplink traffic of the first QoS flow.

Optionally, the information about the endpoint (endpoint) (such as the information about the second endpoint) may include at least one of the following: an identifier of the endpoint, a fully tunnel endpoint identifier (Fully Qualified Tunnel End Point Identifier, F-TEID) or TEID (Tunnel Endpoint IDentifier) of the endpoint, an IP address of the endpoint, an IP address of corresponding UE, and a MAC address of the corresponding UE.

The second endpoint corresponding to the first QoS flow may be a second endpoint of a tunnel corresponding to the first QoS flow. The tunnel is, for example, GTP-U.

The tunnel corresponding to the first QoS flow is at least one of the following: a tunnel sending the traffic of the first QoS flow and a tunnel receiving the traffic of the first QoS flow;

The access network device side information (such as RAN Tunnel Info) is the access network device side information about the second endpoint, which may include at least one of the following: an identifier of the endpoint, an F-TEID or TEID of the endpoint, and an IP address of the endpoint. It is easy to understand that in this case, the fourth communication device is an access network device.

The access network device side information corresponding to the first QoS flow may be: access network device side information of the tunnel corresponding to the first QoS flow;

In an implementation, in a case that the first QoS flow is transferred between access network devices, the first communication device receives the information about the second endpoint corresponding to the first QoS flow regardless of whether the information about the second endpoint corresponding to the first QoS flow has changed, so the first communication device can interpret "receiving the information about the second endpoint corresponding to the first QoS flow" as "the first QoS flow is transferred between access network devices" regardless of whether the information about the second endpoint corresponding to the first QoS flow has changed.

In another implementation, the first communication device interprets "the second endpoint corresponding to the first QoS flow has changed" as "the first QoS flow is transferred between access network devices".

In another implementation, "the second endpoint corresponding to the first QoS flow has changed" does not mean "the first QoS flow is transferred between access network devices". For example, if the RAN remains unchanged, but the I-UPF is changed, the first communication device can determine that "the first QoS flow is transferred between access network devices", only after receiving the information indicating "the first QoS flow is transferred between access network devices" or "the terminal transfers between access network devices".

When the first traffic flow is transferred from a second UPF to a first UPF: a QoS flow (second QoS flow) and PDU session corresponding to the first traffic flow are released in the second UPF, and a QoS flow (first QoS flow) and PDU session corresponding to the first traffic flow are established in the first UPF.

When the AF subscribes to a QoS notification corresponding to the first traffic flow, in a case that a QoS notification of the second QoS flow reports that QoS cannot be guaranteed, QoS can be guaranteed when the first QoS flow is established, and then that QoS can be guaranteed again needs to be reported. Alternatively, a latest QoS notification is disclosed to the first UPF in a case that the first QoS flow is established.

When the AF subscribes to congestion information corresponding to the first traffic flow, and when congestion information of the second QoS flow indicates congestion, information corresponding to no congestion needs to be reported in a case that the first QoS flow is established and not congested. Alternatively, the latest congestion information is sent to the first UPF in a case that the first QoS flow is established.

Optionally, meeting the first condition further includes at least one of the following:
the first QoS flow has not been released;
the resources of the first QoS flow have not been released;
a requirement for monitoring first information corresponding to the first QoS flow is present; and
a first requirement corresponding to the first QoS flow is present.

The first requirement corresponding to the first QoS flow is used to require the first communication device to obtain reported first information from a user plane tunnel.

In an implementation, the first QoS flow being not released may include at least one of the following: context of the first QoS flow is not released, and resources of the first QoS flow are not released.

In an implementation, the resources of the first QoS flow being released may include that context of the first QoS flow is maintained but the resources of the first QoS flow are released. The first QoS flow being released may include that context of the first QoS flow is released and the resources of the first QoS flow are released. The resources of the first QoS flow are, for example, resources of the tunnel corresponding to the first QoS flow (such as GTP-U resources).

In an implementation, the first communication device obtaining reported first information from the user plane tunnel includes that the first communication device obtains the first information by monitoring data packets in the user plane tunnel corresponding to the first QoS flow. For example, a packet header of the data packet of the first QoS flow carries the first information.

Optionally, the first information or second information is information supported for disclosure by an access network device.

Optionally, the first information, the second information, or the information supported for disclosure by the access network device includes at least one of the following: a QoS notification of a QoS flow, and congestion information of the QoS flow.

Optionally, the congestion information of the QoS flow includes at least one of the following: a percentage corresponding to the congestion information, information about data packets required to be marked for congestion, and congestion situation information.

In an implementation, the information about data packets required to be marked for congestion includes at least one of the following: the number of data packets required to be marked for congestion, and a percentage of data packets required to be marked for congestion relative to all data packets.

In an implementation, the congestion information indicates information of congestion marking on data packets, or congestion situation information.

Optionally, meeting the first condition further includes at least one of the following:
congestion information corresponding to the first QoS flow has not been received; and
a notification that QoS of the first QoS flow cannot be guaranteed has not been received.

In an implementation, that the congestion information corresponding to the first QoS flow has not been received includes that the congestion information corresponding to the first QoS flow has never been received from the tunnel (such as GTP-U). It is easy to understand that if the first access network device sends the congestion information of the first QoS flow, in a case that the first QoS flow is transferred from the first access network device to the second access network device, if the second access network device does not send the congestion information corresponding to the first QoS flow, the first communication device can consider it as the first QoS flow being no longer congested.

In an implementation, that the notification that QoS of the first QoS flow cannot be guaranteed has not been received includes that the notification that QoS of the first QoS flow cannot be guaranteed has never been received from the tunnel (such as GTP-U). It is easy to understand that if the first access network device has sent that QoS of the first QoS flow cannot be guaranteed, in a case that the first QoS flow is transferred from the first access network device to the second access network device, if the second access network device does not send that QoS of the first QoS flow cannot be guaranteed, the first communication device can consider it as QoS of the first QoS flow can be guaranteed again.

Optionally, the fourth information includes information used to indicate at least one of the following: congestion information corresponding to the first data flow or the second QoS flow, and a QoS notification corresponding to the first data flow or the second QoS flow.

The first data flow is a data flow bound to the first QoS flow.

In an implementation, in a case that the third information includes information indicating establishment of the first QoS flow, the first communication device further obtains the fourth information.

The second QoS flow may be a QoS flow to which the first data flow is once bound.

In an implementation, the fourth information may be information in the first PDU session context or information in the first QoS flow context. The first QoS flow and/or the second QoS flow are QoS flows in the first PDU session.

In an implementation, the congestion information corresponding to the first data flow or the second QoS flow is latest disclosed congestion information corresponding to the first data flow or the second QoS flow (or the last disclosed congestion information corresponding to the first data flow or the second QoS flow in one or more pieces of disclosed congestion information corresponding to the first data flow or the second QoS flow). For example, the disclosed congestion information in chronological order is a first congestion situation (such as a congestion situation with a value of 80%) and a second congestion situation (such as a congestion situation with a value of 80%). The second congestion situation is the latest disclosed congestion information.

In an implementation, the QoS notification corresponding to the first data flow or the second QoS flow is the latest disclosed QoS notification corresponding to the first data flow or the second QoS flow. Disclosed QoS notifications in chronological order are: GFBR can be guaranteed again and GFBR cannot be guaranteed. GFBR cannot be guaranteed is the latest disclosed QoS notification.

For example, the first data flow is transferred from the second UPF (such as a PSA UPF) to the first UPF (such as another PSA UPF), a QoS flow (such as the second QoS flow) under the second UPF is released, and a bound QoS flow under the first UPF (such as the first QoS flow) is established. In this case, the first communication device can obtain the fourth information from the third communication device.

For another example, under the first communication device, a QoS flow bound to the first data flow has changed, or the QoS flow bound to the first data flow has changed from a second QoS flow to the first QoS flow. In this case, the first communication device obtains the fourth information by itself.

The latest disclosed QoS notification of the second QoS flow is: QoS cannot be guaranteed. However, after the first data flow is transferred from the second UPF to the first UPF, QoS of the first QoS flow can be guaranteed, and the first communication device can send, based on the above information, a notification that QoS of the first data flow can be guaranteed again.

The latest disclosed congestion information of the second QoS flow is information for indicating congestion. However, after the first data flow is transferred from the second UPF to the first UPF, the first QoS flow has no congestion, and the first communication device (for example, the second UPF) can send, based on the above information, information indicating that the first data flow is no longer congested.

Optionally, the first communication device performing the second sub-operation based on the fourth information includes: sending, based on the fourth information, a QoS notification corresponding to the first data flow or the first QoS flow in a case that a fourth condition is met, where the QoS notification includes one of the following: QoS can be guaranteed again, and GFBR can be guaranteed again; where
the fourth condition includes at least one of the following:
QoS of the first QoS flow can be guaranteed or GFBR can be guaranteed; and
the fourth information includes a QoS notification of the first data flow or the second QoS flow, and the QoS notification includes one of the following: QoS cannot be guaranteed, and GFBR cannot be guaranteed.

In an implementation, the sending, based on the fourth information, a QoS notification corresponding to the first data flow or the first QoS flow is sending the QoS notification corresponding to the first data flow or the first QoS flow to a target communication network element that has subscribed to the QoS notification corresponding to the first data flow or the first QoS flow.

Optionally, the first communication device performing the second sub-operation based on the fourth information includes: in a case that a fifth condition is met, sending, based on the fourth information, congestion information corresponding to the first data flow or the first QoS flow, where the congestion information includes information used to indicate no congestion any longer or zero congestion; where
the fifth condition includes at least one of the following:
the fourth information includes congestion information of the first data flow or the second QoS flow, and the congestion information includes information for indicating a congestion situation or does not include information for indicating no congestion; and
the first QoS flow has no congestion.

In an implementation, the sending, based on the fourth information, congestion information corresponding to the first data flow or the first QoS flow is sending, based on the fourth information, the congestion information corresponding to the first data flow or the first QoS flow to a target communication network element that has subscribed to the congestion information corresponding to the first data flow or the first QoS flow.

Optionally, a percentage corresponding to the congestion information includes at least one of the following: the percentage corresponding to the congestion situation, and a percentage of data packets required to be marked for congestion relative to all data packets.

In an implementation, the percentage corresponding to the congestion situation (such as congestion level) means that different percentage values correspond to different congestion situations (such as congestion levels).

Congestion situation information includes congestion level. In an implementation, the congestion situation information can be denoted by a percentage. For example, zero percent is no congestion, and a larger percentage value indicates a higher congestion level.

In an implementation, the information about data packets required to be marked for congestion includes one of the following: a percentage of data packets required to be marked for congestion relative to all data packets, and a percentage of data packets required to be marked for congestion relative to all data packets. For example, when congestion of the QoS flow occurs, congestion marking may need to be performed on data packets in the QoS flow.

In an implementation, there is a correspondence relationship between the congestion situation (such as congestion level) and the data packets required to be marked for congestion. For example, in different congestion situations (such as congestion levels), the number or percentage of data packets required to be marked for congestion may be different. It is easy to understand that a severe congestion situation (such as a higher congestion level) indicates a larger number or percentage of data packets required to be marked for congestion.

In an implementation, in a case that the first communication device determines that the first QoS flow is not congested (no longer congested) or the percentage corresponding to the congestion information is a minimum value or zero, the percentage corresponding to the congestion information being a minimum value or zero is sent to a consumer device subscribing to the congestion information of the QoS flow, or congestion marking is not performed on the data packets.

Optionally, a QoS notification of the QoS flow includes one of the following: QoS of the QoS flow can be guaranteed, QoS of the QoS flow cannot be guaranteed, guaranteed flow bit rate GFBR of the QoS flow cannot be guaranteed, and GFBR of the QoS flow can be guaranteed.

In an implementation, a notification that QoS can be guaranteed or GFBR can be guaranteed may be used to indicate at least one of the following: GFBR can be guaranteed, PER can be guaranteed, PDB can be guaranteed, PSER can be guaranteed, and PSDB can be guaranteed.

In an implementation, a notification that QoS cannot be guaranteed or GFBR cannot be guaranteed may be used to indicate at least one of the following: GFBR cannot be guaranteed, PER cannot be guaranteed, PDB can be guaranteed, PSER cannot be guaranteed, and PSDB cannot be guaranteed.

Optionally, QoS includes at least one of the following: guaranteed flow bit rate GFBR, packet error rate PER, packet delay budget PDB, packet set error rate PSER, and packet set delay budget PSDB.

Optionally, the sending the QoS notification corresponding to the first QoS flow or the first data flow includes:
in a case of determining that QoS of a QoS flow can be guaranteed again, the first communication device sends, to a target device subscribing to the QoS notification, a QoS notification corresponding to the first QoS flow or the first data flow, and the QoS notification corresponding to the first QoS flow or the first data flow includes one of the following: QoS can be guaranteed, and GFBR can be guaranteed;
in a case of determining that PER of a QoS flow can be guaranteed again, the first communication device sends, to a target device subscribing to a QoS notification, information indicating that PER can be guaranteed;
in a case of determining that PDB of a QoS flow can be guaranteed again, the first communication device sends, to a target device subscribing to a QoS notification, information indicating that PDB can be guaranteed;
in a case of determining that PSER of a QoS flow can be guaranteed again, the first communication device sends, to a target device subscribing to a QoS notification, information indicating that PSER can be guaranteed; and
in a case of determining that PSDB of a QoS flow can be guaranteed again, the first communication device sends, to a target device subscribing to a QoS notification, information indicating that PSDB can be guaranteed.

The first data flow is a data flow bound to the first QoS flow.

"Can be guaranteed again" means: changing from "cannot be guaranteed" to "can be guaranteed".

In an implementation, when the first communication device is an SMF, in a case of determining that QoS of a QoS flow can be guaranteed again, a QoS notification corresponding to the first QoS flow or the first data flow is sent to a UPF (such as a PSA UPF), where the QoS notification corresponding to the first QoS flow or the first data flow includes one of the following: QoS can be guaranteed, and GFBR can be guaranteed.

Optionally, the method further includes: determining, by the first communication device based on at least one of the following, that the terminal undergoes an inter-access network device transfer and/or the terminal has transferred from the first access network device to the second access network device:
information indicating at least one of the following has been received: the terminal undergoes an inter-access network device transfer, or the terminal has transferred from the first access network device to the second access network device;
the information about the second endpoint corresponding to the tunnel of the terminal has been received; and
the access network device side information of the tunnel of the terminal has been received.

Optionally, the first communication device determines, based on at least one of the following, that the first QoS flow undergoes an inter-access network device transfer, and/or the first QoS flow has been transferred from the first access network device to the second access network device:
the third information has been obtained;
information about a second endpoint has been obtained, including at least one of the following: information about the second endpoint corresponding to the tunnel of the terminal, information about the second endpoint corresponding to the first QoS flow, and information about the second endpoint corresponding to the first data flow; and
the access network device side information has been obtained, including at least one of the following: access network device side information of the tunnel of the terminal, access network device side information corresponding to the first QoS flow, and access network device side information corresponding to the first data flow; and
in a case of determining that the terminal undergoes an inter-access network device transfer or the terminal has transferred from the first access network device to the second access network device, the first QoS flow has not been released or the resources of the first QoS flow have not been released.

In an implementation, based on that information for "releasing resources of the first QoS flow or for releasing the first QoS flow" is not received, the first communication device determines that the first QoS flow has not been released.

The resources of the first QoS flow are user plane resources, such as GTP-U resources.

The tunnel includes: a point-to-point tunneling protocol GTP-U tunnel.

In this embodiment of this application, the network-side device can obtain changed information, and because the core network device obtains through learning the changed information by obtaining other information, such as transfer of the terminal or QoS flow, establishment of the first QoS flow, or release of the second QoS flow, interaction between the access network device and the core network device can be further reduced. Because the core network device performs, based on the obtained information, an operation such as sending a QoS notification corresponding to the first QoS flow or the first data flow, interaction between the first RAN and the second RAN can be further reduced, thereby reducing signaling overheads.

For example, in a case that the RAN reports a QoS notification, it is generally unnecessary to report the QoS notification when the QoS can be guaranteed. However, if a previous notification indicates that QoS cannot be guaranteed, a subsequent notification that QoS can be guaranteed again needs to be reported. When the QoS flow is transferred or switched, the second RAN needs to know a QoS notification reported by the first RAN to determine whether to report a QoS notification. For example, a notification reported before by the first RAN indicates that QoS cannot be guaranteed, and if QoS can be guaranteed at the second RAN, the second RAN needs to report a notification that QoS can be guaranteed again. However, in the method of this embodiment, the RAN does not need to report a QoS notification when the QoS flow is transferred. Therefore, the first RAN does not need to send a reported QoS notification to the second RAN, and therefore, interaction between RANs can be reduced.

The same holds true for congestion information. No congestion may generally not be reported unless it changes from congestion to no congestion.

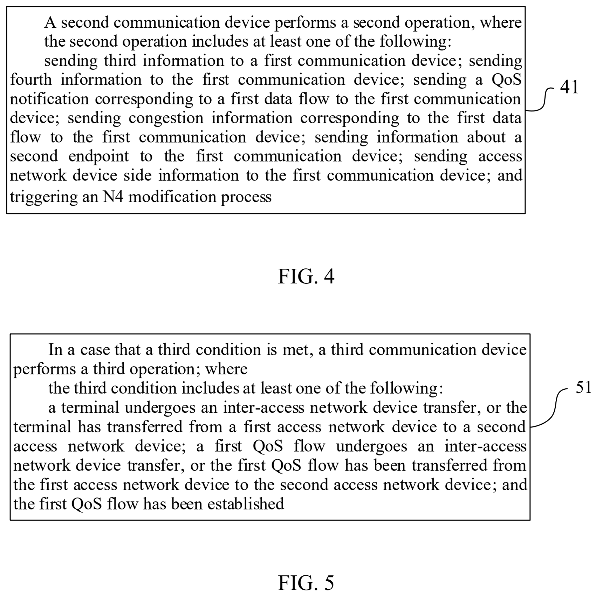

Refer to FIG. 4. An embodiment of this application provides an information interaction method, which is applied to a second communication device. The second communication device includes but is not limited to a CN network element (such as an SMF), and in this case, the CN network element may be referred to as a second CN network element, and the method includes:
Step 41: The second communication device performs a second operation.

The second operation includes at least one of the following:
sending third information to a first communication device, where the third information includes information used to indicate at least one of the following: a terminal undergoes an inter-access network device transfer; a first QoS flow undergoes an inter-access network device transfer; the terminal has transferred from a first access network device to a second access network device; the first QoS flow has been transferred from the first access network device to the second access network device; a QoS flow bound to a first data flow has changed; the QoS flow bound to the first data flow has changed from a second QoS flow to the first QoS flow; and the first QoS flow has been established, and the second QoS flow has been released, or resources of the second QoS flow have been released;
sending fourth information to the first communication device, where the fourth information includes at least one of the following: congestion information corresponding to the first data flow or the second QoS flow, and a QoS notification corresponding to the first data flow or the second QoS flow;
sending a QoS notification corresponding to the first data flow to the first communication device;
sending the congestion information corresponding to the first data flow to the first communication device;
sending information about a second endpoint to the first communication device, including at least one of the following: information about a second endpoint corresponding to a tunnel of the terminal, information about a second endpoint corresponding to the first QoS flow, and information about a second endpoint corresponding to the first data flow;
sending access network device side information to the first communication device, including at least one of the following: access network device side information of the tunnel of the terminal, access network device side information corresponding to the first QoS flow, and access network device side information corresponding to the first data flow; and
triggering an N4 modification process.

The second communication device includes a session management function SMF.

Optionally, the second communication device sends at least one of the following to the first communication device (such as the UPF): third information, fourth information, a QoS notification corresponding to the first data flow, congestion information corresponding to the first data flow, information about the second endpoint, and access network device side information.

In an implementation, in a case that the terminal or the first QoS flow is transferred between the access network devices, and the second communication device is also switched (such as SMF relocation), the second communication device includes one of the following: a source SMF and a target SMF.

N4 is an interface between the second communication device (such as the SMF) and the first communication device (such as the UPF).

In an implementation, the information about the second endpoint is sent in the following manner: sending a corresponding data forwarding rule (such as a forwarding action rule (Forwarding Action Rule, FAR)) of the first QoS flow or the first traffic flow, where the data forwarding rule includes the information about the second endpoint.

In an implementation, triggering a N4 modification process can be used to send at least one of the following: the third information, the information about the second endpoint, and the access network device side information.

In an implementation, the second communication device obtains the fourth information from a fifth communication device. The fifth communication device includes a second UPF. For example, the first data flow is transferred from the second UPF (such as a PSA UPF) to the first UPF (such as another PSA UPF), a QoS flow (such as the second QoS flow) under the second UPF is released, and a bound QoS flow under the first UPF (such as the first QoS flow) is established. For another example, under the first communication device, a QoS flow bound to the first data flow has changed, or the QoS flow bound to the first data flow has changed from a second QoS flow to the first QoS flow.

The latest disclosed QoS notification of the second QoS flow is: QoS cannot be guaranteed. However, after the first data flow is transferred from the second UPF to the first UPF, QoS of the first QoS flow can be guaranteed, and the first communication device can send, based on the above information, a notification that QoS of the first data flow can be guaranteed again.

The latest disclosed congestion information of the second QoS flow is information for indicating congestion. However, after the first data flow is transferred from the second UPF to the first UPF, the first QoS flow has no congestion, and the first communication device (for example, the second UPF) can send, based on the above information, information indicating that the first data flow is no longer congested.

Optionally, the performing, by a second communication device, a second operation includes: performing, by the second communication device, the second operation in a case that a second condition is met; where
the second condition includes at least one of the following:
a terminal undergoes an inter-access network device transfer, or the terminal has transferred from a first access network device to a second access network device;
a first QoS flow undergoes an inter-access network device transfer, or the first QoS flow has been transferred from the first access network device to the second access network device; and
information corresponding to a transferred QoS flow has been received, and the transferred QoS flow includes the first QoS flow;
a requirement for sending a QoS notification corresponding to the first QoS flow through a user plane tunnel is present; and
the first QoS flow has been established.

Receiving the information corresponding to the transferred QoS flow includes receiving a session management context update request message (such as Nsmf_PDUSession_UpdateSMContext), where the message contains the information corresponding to the transferred QoS flow.

Optionally, in a case that the second condition further includes at least one of the following, sending a QoS notification corresponding to the first data flow to the first communication device, where the QoS notification includes one of the following: QoS can be guaranteed and GFBR can be guaranteed:
information used to indicate or index an alternative QoS profile of the first QoS flow has not been received; where
at least one of the first QoS flow undergoing an inter-access network device transfer and the transferred QoS flow including the first QoS flow is interpreted as obtaining a QoS notification corresponding to the first QoS flow, and the QoS notification corresponding to the first QoS flow including one of the following: QoS can be guaranteed, and GFBR can be guaranteed.

An alternative QoS profile (Alternative QoS Profile) includes alternative QoS. In a case that QoS cannot be guaranteed (for example, GFBR), the access network device may apply an alternative QoS profile corresponding to the first QoS flow. In this case, the access network device may send information for indicating or indexing the alternative QoS profile of the first QoS flow to the second communication device (such as a reference to an alternative QoS profile (reference to an Alternative QoS Profile)).

Optionally, in a case that the second condition further includes the following case, sending a QoS notification corresponding to the first data flow to the first communication device, where the QoS notification includes one of the following: QoS cannot be guaranteed, and GFBR cannot be guaranteed:
information used to indicate or index an alternative QoS profile of the first QoS flow has been received.

Optionally, the congestion information corresponding to the first data flow is information indicating at least one of the following:
no congestion, a congestion situation being a minimum value, a percentage of congestion situation being a minimum value, and the congestion situation being zero or the percentage of congestion situation being zero; and
not performing congestion marking on data packets, the number or a percentage of data packets required to be marked for congestion being a minimum value, and performing congestion marking on zero data packets or zero percent of data packets.

Optionally, the congestion information corresponding to the first data flow is sent to the first communication device in a case that the second condition further includes at least one of the following:
information used to indicate or index an alternative QoS profile of the first QoS flow has not been received; where
the congestion information corresponding to the first data flow is information indicating at least one of the following:
   no congestion, a congestion situation being a minimum value, a percentage of congestion situation being a minimum value, and the congestion situation being zero or the percentage of congestion situation being zero; and
   not performing congestion marking on data packets, the number or a percentage of data packets required to be marked for congestion being a minimum value, and performing congestion marking on zero data packets or zero percent of data packets.

Optionally, the second condition further includes at least one of the following:
a requirement for monitoring first information corresponding to the first QoS flow is present;
a first requirement corresponding to the first QoS flow is present;
a second requirement corresponding to the first QoS flow is present; and
the second endpoint corresponding to the first QoS flow has not changed.

The first requirement corresponding to the first QoS flow is used to require the first communication device to obtain reported first information from a user plane tunnel.

The second requirement corresponding to the first QoS flow is used for at least one of the following:
requiring an access network device to monitor second information corresponding to the first QoS flow; and
requiring an access network device to report first information corresponding to the first QoS flow through a user plane tunnel.

In an implementation, the first information is the same as the second information.

In another implementation, the first information is different from the second information, but there is a correspondence relationship.

For example, the second information is a monitored QoS parameter, which may include congestion, and its corresponding first information may be a percentage corresponding to the congestion information. a percentage corresponding to the congestion information includes at least one of the following: the percentage corresponding to the congestion situation, and a percentage of data packets required to be marked for congestion relative to all data packets.

In an implementation, the percentage corresponding to the congestion situation (such as congestion level) means that different percentage values correspond to different congestion situations (such as congestion levels).

For example, the first requirement of the first QoS flow includes a requirement corresponding to QoS notification control. The QoS notification control requires the access network device to monitor whether the first QoS flow can be guaranteed or cannot be guaranteed. In a case that QoS cannot be guaranteed, a QoS notification (for example, GFBR can be guaranteed) corresponding to the first QoS flow is reported through the user plane tunnel (such as GTP-U); in a case that QoS can be guaranteed again, a QoS notification (for example, GFBR can be guaranteed again) corresponding to the first QoS flow is reported.

The tunnel corresponding to the first QoS flow is a tunnel (such as a TNL tunnel (such as GTP-U)) that transmits data of the first QoS flow.

A tunnel is established between the first communication device (such as a PSA UPF) and a fourth communication device (such as an I-UPF or third communication device (such as a RAN)). For the tunnel (such as GTP-U), a first endpoint is established at the first communication device (which can be referred to as a local endpoint from the perspective of the first communication device) and a second endpoint is established at the fourth communication device (which can be referred to as a remote endpoint or a peer endpoint or a fourth communication device side endpoint from the perspective of the first communication device). There may be multiple tunnels between the first communication device and the fourth communication device. The first communication device establishes a tunnel separately with a plurality of fourth communication devices. Therefore, in a case that the first communication device wants to send traffic of the first QoS flow, it needs to specify a second endpoint.

From the perspective of the first QoS flow, the traffic of the first QoS flow is sent between the first endpoint in the first communication device and the second endpoint in the fourth communication device.

Therefore, the second endpoint needs to be specified for the traffic of the first QoS flow sent from the first communication device to the fourth communication device. In an implementation, the second endpoint corresponding to the first QoS flow may be a target endpoint that sends the traffic of the first QoS flow. A first endpoint also needs to be specified for the traffic of the first QoS flow sent from the fourth communication device to the first communication device. Therefore, in another implementation, from the perspective of the first communication device, the second endpoint corresponding to the first QoS flow may be a source endpoint that receives the traffic of the first QoS flow.

In a case that the terminal or the first QoS flow is transferred between the access network devices, the second endpoint corresponding to the first QoS flow may change or may not change.

Scenario 1: When the fourth communication device is an I-UPF, the second endpoint corresponding to the first QoS flow may not be changed in a case that the terminal or the first QoS flow is transferred between the access network devices.

Scenario 2: When the fourth communication device is a RAN, the second endpoint corresponding to the first QoS flow changes in a case that the terminal or the first QoS flow is transferred between the access network devices.

In the prior art, in a case that the second endpoint changes, the second communication device sends information about the updated second endpoint to the first communication device. For scenario 1, when the first QoS flow is transferred, but the second endpoint corresponding to the first QoS flow has not changed, the second communication device still sends the information about the second endpoint corresponding to the first QoS flow to the first communication device. In this way, least impact is imposed on an interface between the first communication device and the second communication device. In addition, the first communication device receiving information about the second endpoint can be understood as at least one of the following:
the first QoS flow is transferred:
in a case that "QoS cannot be guaranteed" is not received from the tunnel corresponding to the first QoS flow, the first communication device understands that QoS of the first QoS flow can be guaranteed,
in a case that congestion information is not received from the tunnel corresponding to the first QoS flow, the first communication device understands that there is no congestion for the first QoS flow or a value of the congestion information is no congestion.

Optionally, the first information or second information is information supported for disclosure by an access network device.

Optionally, the first information, the second information, or the information supported for disclosure by the access network device includes at least one of the following: a QoS notification of a QoS flow, and congestion information of the QoS flow.

Optionally, the fourth information includes information used to indicate at least one of the following: congestion information corresponding to the first data flow or the second QoS flow, and a QoS notification corresponding to the first data flow or the second QoS flow; where the first data flow is a data flow bound to the first QoS flow.

In an implementation, in a case that the third information includes information indicating establishment of the first QoS flow, the first communication device further obtains the fourth information.

The second QoS flow is a QoS flow to which the first data flow is once bound.

In an implementation, the fourth information may be information in the first PDU session context or information in the first QoS flow context. The first QoS flow and/or the second QoS flow are QoS flows in the first PDU session.

In an implementation, the congestion information corresponding to the first data flow or the second QoS flow is latest disclosed congestion information corresponding to the first data flow or the second QoS flow (or the last disclosed congestion information corresponding to the first data flow or the second QoS flow in one or more pieces of disclosed congestion information corresponding to the first data flow or the second QoS flow). For example, the disclosed congestion information in chronological order is a first congestion situation (such as a congestion situation with a value of 80%) and a second congestion situation (such as a congestion situation with a value of 80%). The second congestion situation is the latest disclosed congestion information.

In an implementation, the QoS notification corresponding to the first data flow or the second QoS flow is the latest disclosed QoS notification corresponding to the first data flow or the second QoS flow. Disclosed QoS notifications in chronological order are: GFBR can be guaranteed again and GFBR cannot be guaranteed. GFBR cannot be guaranteed is the latest disclosed QoS notification.

For example, the first data flow is transferred from the second UPF (such as a PSA UPF) to the first UPF (such as another PSA UPF), a QoS flow (such as the second QoS flow) under the second UPF is released, and a bound QoS flow under the first UPF (such as the first QoS flow) is established. In this case, the first communication device can obtain the fourth information from the third communication device.

For another example, under the first communication device, a QoS flow bound to the first data flow has changed, or the QoS flow bound to the first data flow has changed from a second QoS flow to the first QoS flow. In this case, the first communication device obtains the fourth information by itself.

The latest disclosed QoS notification of the second QoS flow is: QoS cannot be guaranteed. However, after the first data flow is transferred from the second UPF to the first UPF, QoS of the first QoS flow can be guaranteed, and the first communication device can send, based on the above information, a notification that QoS of the first data flow can be guaranteed again.

The latest disclosed congestion information of the second QoS flow is information for indicating congestion. However, after the first data flow is transferred from the second UPF to the first UPF, the first QoS flow has no congestion, and the first communication device (for example, the second UPF) can send, based on the above information, information indicating that the first da flow is no longer congested.

Optionally, the congestion information of the QoS flow includes at least one of the following: a percentage corresponding to the congestion information, information about data packets required to be marked for congestion, and congestion situation information.

In an implementation, a percentage corresponding to the congestion information includes at least one of the following: the percentage corresponding to the congestion situation, and a percentage of data packets required to be marked for congestion relative to all data packets.

In an implementation, the percentage corresponding to the congestion situation (such as congestion level) means that different percentage values correspond to different congestion situations (such as congestion levels).

In an implementation, the information about data packets required to be marked for congestion includes at least one of the following: the number of data packets required to be marked for congestion, and a percentage of data packets required to be marked for congestion relative to all data packets.

Optionally, a QoS notification of the QoS flow includes one of the following: QoS of the QoS flow can be guaranteed, QoS of the QoS flow cannot be guaranteed, GFBR of the QoS flow cannot be guaranteed, and GFBR of the QoS flow can be guaranteed.

In an implementation, that QoS can be guaranteed means at least one of the following: GFBR can be guaranteed, PER can be guaranteed, PDB can be guaranteed, PSER can be guaranteed, and PSDB can be guaranteed.

In an implementation, that QoS cannot be guaranteed includes at least one of the following: GFBR cannot be guaranteed, PER cannot be guaranteed, PDB can be guaranteed, PSER cannot be guaranteed, and PSDB cannot be guaranteed.

In an implementation, a notification that QoS can be guaranteed or GFBR can be guaranteed may be used to indicate at least one of the following: GFBR can be guaranteed, PER can be guaranteed, PDB can be guaranteed, PSER can be guaranteed, and PSDB can be guaranteed.

In an implementation, a notification that QoS cannot be guaranteed or GFBR cannot be guaranteed may be used to indicate at least one of the following: GFBR cannot be guaranteed, PER cannot be guaranteed, PDB can be guaranteed, PSER cannot be guaranteed, and PSDB cannot be guaranteed.

Optionally, QoS includes at least one of the following: guaranteed flow bit rate GFBR, packet error rate PER, packet delay budget PDB, packet set error rate PSER, and packet set delay budget PSDB.

In this embodiment of this application, the network-side device can obtain changed information, and because the core network device obtains through learning the changed information by obtaining other information, such as transfer of the terminal or QoS flow, establishment of the first QoS flow, or release of the second QoS flow, interaction between the access network device and the core network device can be further reduced. Because the core network device performs, based on the obtained information, an operation such as sending a QoS notification corresponding to the first QoS flow or the first data flow, interaction between the first RAN and the second RAN can be further reduced, thereby reducing signaling overheads.

For example, in a case that the RAN reports a QoS notification, it is generally unnecessary to report the QoS notification when the QoS can be guaranteed. However, if a previous notification indicates that QoS cannot be guaranteed, a subsequent notification that QoS can be guaranteed again needs to be reported. When the QoS flow is transferred or switched, the second RAN needs to know a QoS notification reported by the first RAN to determine whether to report a QoS notification. For example, a notification reported by the first RAN before indicates that QoS cannot be guaranteed, and if it can be guaranteed, the second RAN needs to report a notification that QoS can be guaranteed again. However, in the method of this embodiment, the RAN does not need to report a QoS notification when the QoS flow is transferred. Therefore, the first RAN does not need to send a reported QoS notification to the second RAN, and therefore, interaction between RANs can be reduced.

The same holds true for congestion information. No congestion may generally not be reported unless it changes from congestion to no congestion.

Refer to FIG. 5. An embodiment of this application provides an information interaction method, which is applied to a third communication device. The third communication device includes, but is not limited to, an access network device (such as a RAN network element), and the method includes the following step.

Step 51: In a case that a third condition is met, the third communication device performs a third operation.

The third condition includes at least one of the following:
a terminal undergoes an inter-access network device transfer, or the terminal has transferred from a first access network device to a second access network device;
a first QoS flow undergoes an inter-access network device transfer, or the first QoS flow has been transferred from the first access network device to the second access network device; and
the first QoS flow has been established; where
the third operation includes at least one of the following:
   sending first information through a user plane tunnel corresponding to the first QoS flow;
   sending a QoS notification through the user plane tunnel corresponding to the first QoS flow, or sending a QoS notification corresponding to the first QoS flow;
   sending congestion information through the user plane tunnel corresponding to the first QoS flow, or sending congestion information corresponding to the first QoS flow;
   sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
   sending information indicating one of the following through the user plane tunnel corresponding to the first QoS flow: not performing congestion marking on data packets, the number or a percentage of data packets required to be marked for congestion being a minimum value, and performing congestion marking on zero data packets or zero percent of data packets.

The third communication device includes: an access network device (such as a RAN network element or a base station).

Optionally, the third communication device sends at least one of the following to the first communication device (such as a UPF) or the second communication device (such as an SMF): first information; a QoS notification corresponding to the first data flow; congestion information corresponding to the first QoS flow; information indicating one of the following: no congestion, a congestion situation being a minimum value, a corresponding percentage of the congestion situation being a minimum value, and the congestion situation being zero or the corresponding percentage of the congestion situation being zero; and information used for indicating one of the following: not performing congestion marking on data packets, the number or a percentage of data packets required to be marked for congestion being a minimum value, and performing congestion marking on zero data packets or zero percent of data packets.

Sending a QoS notification through the user plane tunnel corresponding to the first QoS flow means that the QoS notification is carried in a header (such as a packet header of GTP-U) of a data packet of the first QoS flow.

In an implementation, in a case that the terminal is transferred from the first access network device to the second access network device or the first QoS flow is transferred from the first access network device to the second access network device, the third communication device includes one of the following: the first access network device and the second access network device.

That QoS can be guaranteed includes: QoS can be guaranteed again. For example, that GFBR can be guaranteed includes that GFBR can be guaranteed again.

The congestion situation can be denoted by percentage, and the congestion situation being a minimum value can be denoted by the percentage corresponding to the congestion situation being a minimum value. It is easy to understand that different percentages can represent different levels of congestion situations. The minimum value of percentage may be zero.

Data packets required to be marked for congestion can be represented by percentage. Data packets required to be marked for congestion can be represented as that a percentage of data packets required to be marked for congestion relative to all data packets is a minimum value. Generally, the minimum value is zero.

No congestion includes: no more congestion. In an implementation, no congestion corresponds to a congestion situation with a value being zero.

Not congestion marking on data packets includes: no more congestion marking on the data packets.

Not congestion marking on data packets of the first QoS flow includes: no more congestion marking on the data packets of the first QoS flow. For congestion marking, for example, a bit corresponding to an ECN is set to a corresponding congestion value (for example, CE congestion experienced: 11).

Optionally, in a case that the third condition further includes an alternative QoS profile of the first QoS flow not being applied, the third operation includes at least one of the following:
sending a QoS notification through the user plane tunnel corresponding to the first QoS flow, where the QoS notification includes one of the following: QoS can be guaranteed, and GFBR can be guaranteed;
sending a QoS notification corresponding to the first QoS flow, where the QoS notification includes one of the following: QoS can be guaranteed, and GFBR can be guaranteed;
sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
sending, through the user plane tunnel corresponding to the first QoS flow, information indicating one of the following: not performing congestion marking on data packets, the number or a percentage of data packets required to be marked for congestion being a minimum value, and performing congestion marking on zero data packets or zero percent of data packets; and
sending congestion information corresponding to the first QoS flow; where
the congestion includes information indicating at least one of the following:
   no congestion, a congestion situation being a minimum value, a corresponding percentage of the congestion situation being a minimum value, and the congestion situation being zero or the corresponding percentage of the congestion situation being zero; and
   not performing congestion marking on data packets, the number or a percentage of data packets required to be marked for congestion being a minimum value, and performing congestion marking on zero data packets or zero percent of data packets.

Optionally, an alternative QoS profile (Alternative QoS Profile) includes alternative QoS. In a case that QoS cannot be guaranteed (for example, GFBR), the access network device may apply an alternative QoS profile corresponding to the first QoS flow. In this case, the access network device may send information for indicating or indexing the alternative QoS profile of the first QoS flow to the second communication device (such as a reference to an alternative QoS profile (reference to an Alternative QoS Profile)).

It is easy to understand that the alternative QoS profile is not applied, indicating that original QoS can be guaranteed and the QoS flow is not congested.

Optionally, in a case that the third condition further includes an alternative QoS profile of the first QoS flow being applied, the third operation includes:
sending a QoS notification through the user plane tunnel corresponding to the first QoS flow, where the QoS notification includes one of the following: QoS cannot be guaranteed, and GFBR cannot be guaranteed.

Optionally, the third condition further includes at least one of the following:
QoS of the first QoS flow can be guaranteed, or the first QoS flow has been successfully transferred to a second access network device; and
a requirement for monitoring first information corresponding to the first QoS flow is present, and a second requirement corresponding to the first QoS flow is present.

The second requirement corresponding to the first QoS flow is used to require at least one of the following:
requiring an access network device to monitor second information corresponding to the first QoS flow; and
requiring an access network device to report first information corresponding to the first QoS flow through a user plane tunnel.

Optionally, the first information or second information is information supported for disclosure by an access network device.

Optionally, the first information, the second information, or the information supported for disclosure by the access network device includes at least one of the following: a QoS notification of a QoS flow, and congestion information of the QoS flow.

Optionally, the congestion information of the QoS flow includes at least one of the following: a percentage corresponding to the congestion information, information about data packets required to be marked for congestion, and congestion situation information.

In an implementation, the information about data packets required to be marked for congestion includes at least one of the following: the number of data packets required to be marked for congestion, and a percentage of data packets required to be marked for congestion relative to all data packets.

Optionally, a percentage corresponding to the congestion information includes at least one of the following: the percentage corresponding to the congestion situation, and a percentage of data packets required to be marked for congestion relative to all data packets.

In an implementation, the percentage corresponding to the congestion situation (such as congestion level) means that different percentage values correspond to different congestion situations (such as congestion levels).

Congestion situation information (such as a congestion level) can be denoted by a percentage.

Optionally, a QoS notification of the QoS flow includes one of the following: QoS of the QoS flow can be guaranteed, QoS of the QoS flow cannot be guaranteed, guaranteed flow bit rate GFBR of the QoS flow cannot be guaranteed, and GFBR of the QoS flow can be guaranteed.

In an implementation, that QoS can be guaranteed means at least one of the following: GFBR can be guaranteed, PER can be guaranteed, PDB can be guaranteed, PSER can be guaranteed, and PSDB can be guaranteed.

In an implementation, that QoS cannot be guaranteed includes at least one of the following: GFBR cannot be guaranteed, PER cannot be guaranteed, PDB can be guaranteed, PSER cannot be guaranteed, and PSDB cannot be guaranteed.

In an implementation, a notification that QoS can be guaranteed or GFBR can be guaranteed may be used to indicate at least one of the following: GFBR can be guaranteed, PER can be guaranteed, PDB can be guaranteed, PSER can be guaranteed, and PSDB can be guaranteed.

In an implementation, a notification that QoS cannot be guaranteed or GFBR cannot be guaranteed may be used to indicate at least one of the following: GFBR cannot be guaranteed, PER cannot be guaranteed, PDB can be guaranteed, PSER cannot be guaranteed, and PSDB cannot be guaranteed.

Optionally, QoS includes at least one of the following: guaranteed flow bit rate GFBR, packet error rate PER, packet delay budget PDB, packet set error rate PSER, and packet set delay budget PSDB.

In an implementation, the requirement for monitoring the first information corresponding to the first QoS flow includes a QoS monitoring parameter, where the QoS monitoring parameter includes congestion. Optionally, the first information includes congestion.

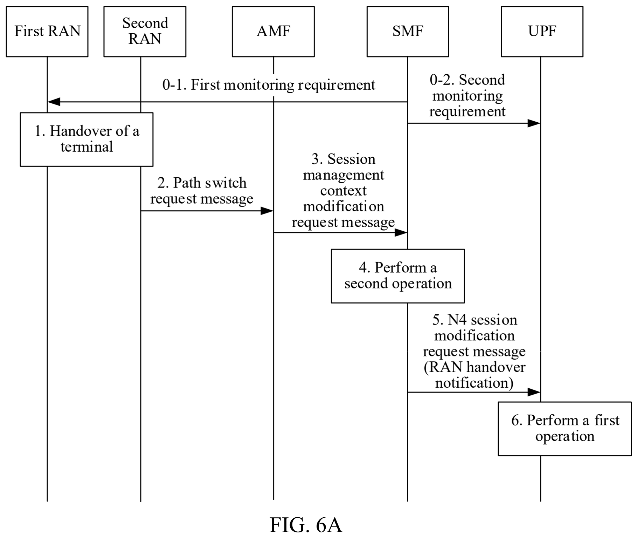

Application scenario 1 in this embodiment of this application is mainly for an X2 handover scenario, where the X2 interface is an interface between access network elements. Referring to FIG. 6A, the procedure includes the following steps.

Step 0-1: The SMF sends a first monitoring requirement to the first RAN.

The first monitoring requirement includes at least one of the following:
a requirement for monitoring first information corresponding to the first QoS flow; and
a first requirement corresponding to the first QoS flow, where the first requirement corresponding to the first QoS flow is used to require the first communication device to obtain reported first information from the user plane tunnel.

Step 0-2: The SMF sends a second monitoring requirement to the UPF.

The second monitoring requirement includes at least one of the following:
a requirement for monitoring first information corresponding to the first QoS flow; and
a second requirement corresponding to the first QoS flow, where the second requirement corresponding to the first QoS flow is used for at least one of the following:
   requiring an access network device to monitor second information corresponding to the first QoS flow; and
   requiring an access network device to report first information corresponding to the first QoS flow through a user plane tunnel.

Step 0-1 and step 0-2 are performed in no particular order.

Step 1: The terminal is transferred (also referred to as handover) from the first RAN to the second RAN.

Context of the terminal includes a monitoring requirement of the first QoS flow.

Step 2: The second RAN sends a path switching request message to an AMF. Optionally, the message contains information about the transferred QoS flow and the transferred QoS flow contains the first QoS flow.

Step 3: The AMF sends a session management context modification request message to the SMF. Optionally, the message contains information about the transferred QoS flow and the transferred QoS flow contains the first QoS flow.

Step 4: The SMF performs a second operation, specifically as described in the embodiment of the second communication device in FIG. 4.

Step 5: The SMF sends an N4 session modification request message to the UPF.

Optionally, third information is included in the message, and the third information includes information indicating at least one of the following: the terminal transfers between access network devices (such as a HO event), and the first QoS flow is transferred between access network devices (such as a HO event).

Optionally, the message includes a QoS notification corresponding to the first data flow. For example, the SMF notifies the first communication device of QoS corresponding to the first data flow, in a case that a second condition is met.

Step 6: The UPF performs a first operation, as described in the embodiment of the first communication device in FIG. 3.

Optionally, in a case that the first condition (inter-RAN network element handover occurs or resources of QoS flow are not released) is met, the UPF performs the first operation, where the first operation includes at least one of the following:
determining that GFBR of the QoS flow can be guaranteed again, and sending information that the GFBR can be guaranteed again to the consumer device subscribing to the QoS notification of the QoS flow; and determining that the first QoS flow is not congested or the percentage corresponding to the congestion information is a minimum value or 0, and disclosing the percentage corresponding to the congestion information being a minimum value or zero to the consumer device subscribing to the congestion information of the QoS flow, or not performing congestion marking on the data packets.

Optionally, the first communication device sends a QoS notification corresponding to the first QoS flow or the first data flow based on the obtained QoS notification corresponding to the first data flow.

Optionally, a percentage corresponding to the congestion information includes at least one of the following: the percentage corresponding to the congestion situation, and a percentage of data packets required to be marked for congestion relative to all data packets.

No congestion can alternatively be expressed as one of the following: a congestion situation being a minimum value, a corresponding percentage of the congestion situation being a minimum value, and the congestion situation being zero or the corresponding percentage of the congestion situation being zero.

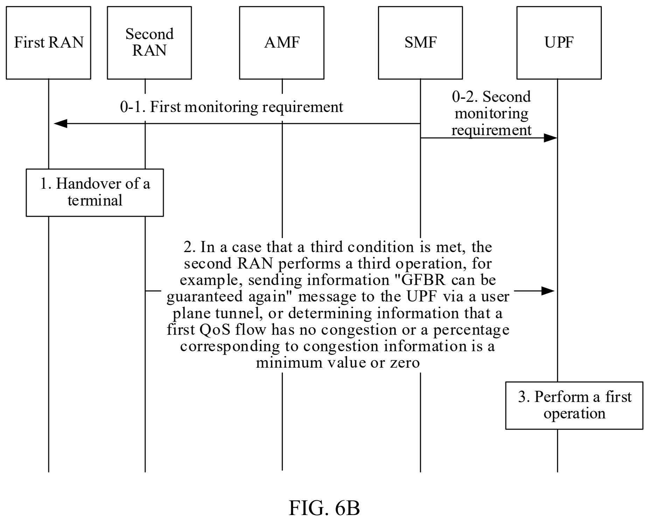

Referring to FIG. 6B, the procedure includes the following steps.

Step 0-1: The SMF sends a first monitoring requirement to the first RAN.

The first monitoring requirement includes at least one of the following:
a requirement for monitoring first information corresponding to the first QoS flow; and
a first requirement corresponding to the first QoS flow, where the first requirement corresponding to the first QoS flow is used to require the first communication device to obtain reported first information from the user plane tunnel.

Step 0-2: The SMF sends a second monitoring requirement to the UPF.

The second monitoring requirement includes at least one of the following:
a requirement for monitoring first information corresponding to the first QoS flow; and
a second requirement corresponding to the first QoS flow, where the second requirement corresponding to the first QoS flow is used for at least one of the following:
   requiring an access network device to monitor second information corresponding to the first QoS flow; and
   requiring an access network device to report first information corresponding to the first QoS flow through a user plane tunnel.

Step 1: The terminal is transferred (also referred to as handover) from the first RAN to the second RAN.

Step 2: In a case that a third condition is met, the second RAN performs a third operation, as described in the embodiment of the third communication device shown in FIG. 5.

For example, in a case that the RAN accepts establishment of the first QoS flow, and the alternative QoS profile of the first QoS flow is not applied, information that "GFBR can be guaranteed again" is sent to the UPF through the user plane tunnel; or
information that the first QoS flow has no congestion or the percentage corresponding to the congestion information is a minimum value or zero is sent through the user plane tunnel.

Step 3: The UPF performs a first operation.

The embodiment shown in FIG. 6B is also applicable to an N2 handover scenario.

Application Scenario 2 in this embodiment of this application:

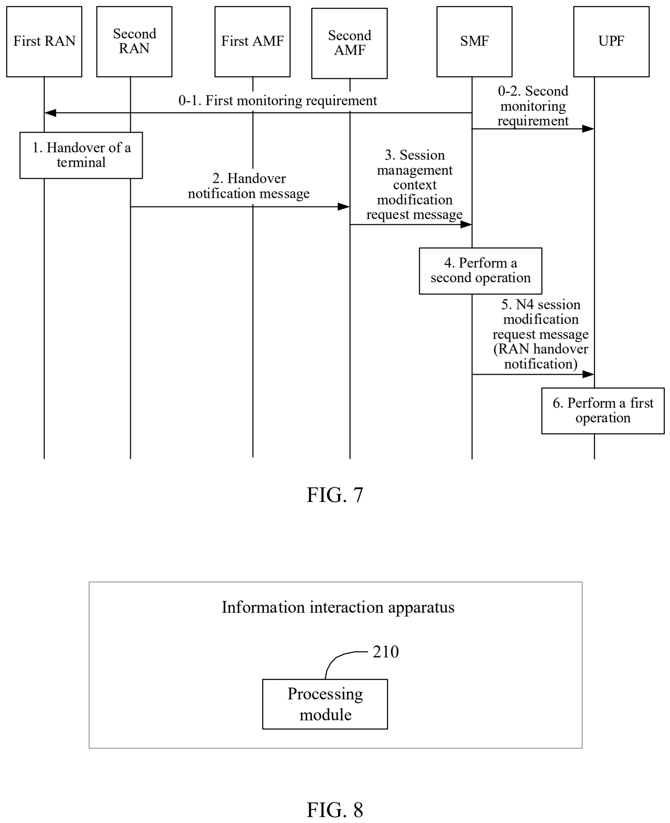

Application scenario 2 in this embodiment of this application is mainly for an N2 handover scenario, where the N2 interface is an interface between the access network element and the core network element. Referring to FIG. 7, the procedure includes the following steps.

Step 0-1: The SMF sends a first monitoring requirement to the first RAN, which is the same as step 0-1 of application scenario 1.

Step 0-2: The SMF sends a second monitoring requirement to the UPF, which is the same as step 0-1 of application scenario 1.

Step 1: The terminal is transferred (also referred to as handover) from the first RAN to the second RAN.

Step 2: The second RAN sends a handover notification message to the second AMF. Optionally, the message contains information about the transferred QoS flow and the transferred QoS flow contains the first QoS flow.

Step 3: The second AMF sends a session management context modification request message to the SMF. Optionally, the message contains information about the transferred QoS flow and the transferred QoS flow contains the first QoS flow.

Step 4: The SMF performs a second operation, specifically as described in the embodiment of the second communication device in FIG. 4.

Step 5: The SMF sends an N4 session modification request message to the UPF.

Optionally, third information is included in the message, and the third information includes information indicating at least one of the following: the terminal transfers between access network devices (such as a HO event), and the first QoS flow is transferred between access network devices (such as a HO event).

Optionally, the message includes a QoS notification corresponding to the first data flow. For example, the SMF notifies the first communication device of QoS corresponding to the first data flow, in a case that a second condition is met.

Step 6: The UPF performs a first operation, as described in the embodiment of the first communication device in FIG. 3.

Optionally, in a case that the first condition (inter-RAN network element handover occurs or resources of QoS flow are not released) is met, the UPF performs the first operation, where the first operation includes at least one of the following:
determining that GFBR of the QoS flow can be guaranteed again, and sending information that the GFBR can be guaranteed again to the consumer device subscribing to the QoS notification of the QoS flow; and determining that the first QoS flow is not congested or the percentage corresponding to the congestion information is a minimum value or zero, and sending the percentage corresponding to the congestion information being a minimum value or zero to the consumer device subscribing to the congestion information of the QoS flow, or not performing congestion marking on the data packets.

Optionally, the first communication device sends a QoS notification corresponding to the first QoS flow or the first data flow based on the obtained QoS notification corresponding to the first data flow.

For the information interaction method provided in this embodiment of this application, the execution subject may be an information interaction apparatus. In the embodiments of this application, the information interaction apparatus provided in the embodiments of this application is described by using the information interaction method being executed by the information interaction apparatus as an example.

FIG. 8 is a first schematic structural diagram of an information interaction apparatus according to an embodiment of this application. As shown in FIG. 8, the information interaction apparatus provided in this embodiment includes:
a processing module 210, configured to perform a first operation, including at least one of the following:
in a case that a first condition is met, the first communication device performs a first sub-operation;
the first communication device obtains fourth information, and the first communication device performs a second sub-operation based on the fourth information;
the first communication device receives a QoS notification corresponding to a first data flow from a second communication device, and the first communication device sends a QoS notification corresponding to a first QoS flow or the first data flow based on the obtained QoS notification corresponding to the first data flow; and
the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow.

The first condition being met includes at least one of the following:
a terminal undergoes an inter-access network device transfer, or the terminal has transferred from a first access network device to a second access network device;
the first quality of service QoS flow undergoes an inter-access network device transfer, or the first QoS flow has been transferred from the first access network device to the second access network device;
a QoS flow bound to the first data flow has changed, or the QoS flow bound to the first data flow has changed from a second QoS flow to the first QoS flow;
the first QoS flow has been established, and the second QoS flow has been released, or resources of the second QoS flow have been released;
a second endpoint corresponding to a tunnel of the terminal has changed, a second endpoint corresponding to the first QoS flow has changed, and/or a second endpoint corresponding to the first data flow has changed;
access network device side information for the tunnel of the terminal has changed, or access network device side information corresponding to the first QoS flow has changed, and/or access network device side information corresponding to the first data flow has changed;
third information has been obtained, where the third information includes information used to indicate at least one of the following: the terminal undergoes an inter-access network device transfer; the first QoS flow undergoes an inter-access network device transfer; the terminal has transferred from the first access network device to the second access network device; the first QoS flow has been transferred from the first access network device to the second access network device; the QoS flow bound to the first data flow has changed; the QoS flow bound to the first data flow has changed from the second QoS flow to the first QoS flow; and the first QoS flow has been established, and the second QoS flow has been released, or resources of the second QoS flow have been released;
information about a second endpoint has been obtained, including at least one of the following: information about the second endpoint corresponding to the tunnel of the terminal, information about the second endpoint corresponding to the first QoS flow, and information about the second endpoint corresponding to the first data flow; and
access network device side information has been obtained, including at least one of the following: access network device side information of the tunnel of the terminal, access network device side information corresponding to the first QoS flow, and access network device side information corresponding to the first data flow.

The second endpoint corresponding to the first QoS flow is one of the following: a target endpoint sending traffic of the first QoS flow, and a source endpoint receiving traffic of the first QoS flow.

The first sub-operation includes at least one of the following:
determining that QoS of the first QoS flow can be guaranteed; and determining that GFBR of the first QoS flow can be guaranteed;
interpreting at least one of the obtaining third information, obtaining information about the second endpoint, and/or obtaining access network device side information as obtaining a QoS notification corresponding to the first QoS flow, where the QoS notification corresponding to the first QoS flow includes one of the following: QoS can be guaranteed, and GFBR can be guaranteed;
determining that the first QoS flow has no congestion;
determining not to perform congestion marking on data packets of the first QoS flow;
determining that congestion information of the first QoS flow is information used to indicate one of the following: no congestion, a congestion situation being a minimum value, a percentage of congestion situation being a minimum value, and the congestion situation being zero or the percentage of congestion situation being zero;
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no congestion, a congestion situation being a minimum value, a corresponding percentage of the congestion situation being a minimum value, and the congestion situation being zero or the corresponding percentage of the congestion situation being zero;
determining that the congestion information of the first QoS flow is information used to indicate one of the following: not performing congestion marking on data packets, the number or a percentage of data packets required to be marked for congestion being a minimum value, and performing congestion marking on zero data packets or zero percent of data packets; and
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no longer performing congestion marking on data packets, the number of data packets required to be marked for congestion being a minimum value, performing congestion marking on zero data packets or zero percent of data packets.

The second sub-operation includes at least one of the following:
sending a QoS notification corresponding to the first QoS flow or the first data flow; and
sending congestion information corresponding to the first QoS flow or the first data flow.

Optionally, meeting the first condition further includes at least one of the following:
the first QoS flow has not been released;
the resources of the first QoS flow have not been released;
a requirement for monitoring first information corresponding to the first QoS flow is present; and
a first requirement corresponding to the first QoS flow is present.

The first requirement corresponding to the first QoS flow is used to require the first communication device to obtain reported first information from a user plane tunnel.

Optionally, the first information or second information is information supported for disclosure by an access network device.

Optionally, the first information, the second information, or the information supported for disclosure by the access network device includes at least one of the following: a QoS notification of a QoS flow, and congestion information of the QoS flow.

Optionally, the congestion information of the QoS flow includes at least one of the following: a percentage corresponding to the congestion information, information about data packets required to be marked for congestion, and congestion situation information.

Optionally, meeting the first condition further includes at least one of the following:
congestion information corresponding to the first QoS flow has not been received; and
a notification that QoS of the first QoS flow cannot be guaranteed has not been received.

Optionally, the fourth information includes information used to indicate at least one of the following: congestion information corresponding to the first data flow or the second QoS flow, and a QoS notification corresponding to the first data flow or the second QoS flow; where the first data flow is a data flow bound to the first QoS flow.

Optionally, the processing module 210 is specifically configured to:
send a QoS notification corresponding to the first data flow or the first QoS flow based on the fourth information in a case that a fourth condition is met, where the QoS notification includes one of the following: QoS can be guaranteed again, and GFBR can be guaranteed again; where
the fourth condition includes at least one of the following:
   QoS of the first QoS flow can be guaranteed or GFBR can be guaranteed; and
   the fourth information includes a QoS notification of the first data flow or the second QoS flow, and the QoS notification includes one of the following: QoS cannot be guaranteed, and GFBR cannot be guaranteed.

Optionally, the processing module 210 is specifically configured to:
send, based on the fourth information, congestion information corresponding to the first data flow or the first QoS flow in a case that a fifth condition is met, where the congestion information includes information used to indicate no congestion any longer or zero congestion; where
the fifth condition includes at least one of the following:
   the fourth information includes congestion information of the first data flow or the second QoS flow, and the congestion information includes information for indicating a congestion situation or does not include information for indicating no congestion; and
   the first QoS flow has no congestion.

Optionally, a percentage corresponding to the congestion information includes at least one of the following: the percentage corresponding to the congestion situation, and a percentage of data packets required to be marked for congestion relative to all data packets.

Optionally, a QoS notification of the QoS flow includes one of the following: QoS of the QoS flow can be guaranteed, QoS of the QoS flow cannot be guaranteed, guaranteed flow bit rate GFBR of the QoS flow cannot be guaranteed, and GFBR of the QoS flow can be guaranteed.

Optionally, QoS includes at least one of the following: guaranteed flow bit rate GFBR, packet error rate PER, packet delay budget PDB, packet set error rate PSER, and packet set delay budget PSDB.

Optionally, the processing module 210 is specifically configured to:
in a case of determining that QoS of a QoS flow can be guaranteed again, send, to a target device subscribing to the QoS notification, a QoS notification corresponding to the first QoS flow or the first data flow, and the QoS notification corresponding to the first QoS flow or the first data flow includes one of the following: QoS can be guaranteed, and GFBR can be guaranteed;
in a case of determining that PER of a QoS flow can be guaranteed again, send, to a target device subscribing to a QoS notification, information indicating that PER can be guaranteed;
in a case of determining that PDB of a QoS flow can be guaranteed again, send, to a target device subscribing to a QoS notification, information indicating that PDB can be guaranteed;
in a case of determining that PSER of a QoS flow can be guaranteed again, send, to a target device subscribing to a QoS notification, information indicating that PSER can be guaranteed; and
in a case of determining that PSDB of a QoS flow can be guaranteed again, send, to a target device subscribing to a QoS notification, information indicating that PSDB can be guaranteed; where
the first data flow is a data flow bound to the first QoS flow.

Optionally, the processing module 210 is further configured to determine, based on at least one of the following, that the terminal undergoes an inter-access network device transfer and/or the terminal has transferred from the first access network device to the second access network device:
information indicating at least one of the following has been received: the terminal undergoes an inter-access network device transfer, or the terminal has transferred from the first access network device to the second access network device;
the information about the second endpoint corresponding to the tunnel of the terminal has been received; and
the access network device side information of the tunnel of the terminal has been received.

Optionally, the processing module 210 is specifically configured to determine, based on at least one of the following, that the first QoS flow undergoes an inter-access network device transfer, and/or the first QoS flow has been transferred from the first access network device to the second access network device:
the third information has been obtained;
information about a second endpoint has been obtained, including at least one of the following: information about the second endpoint corresponding to the tunnel of the terminal, information about the second endpoint corresponding to the first QoS flow, and information about the second endpoint corresponding to the first data flow; and
the access network device side information has been obtained, including at least one of the following: access network device side information of the tunnel of the terminal, access network device side information corresponding to the first QoS flow, and access network device side information corresponding to the first data flow; and
in a case of determining that the terminal undergoes an inter-access network device transfer or the terminal has transferred from the first access network device to the second access network device, the first QoS flow has not been released or the resources of the first QoS flow have not been released.

The apparatus in this embodiment can be configured to execute the method in any one of the aforementioned method embodiments on the first communication device side, and its specific implementation processes and technical effects are similar to those in the method embodiments on the first communication device side. For details, refer to the detailed description in the method embodiments on the first communication device side. Details are not repeated here.

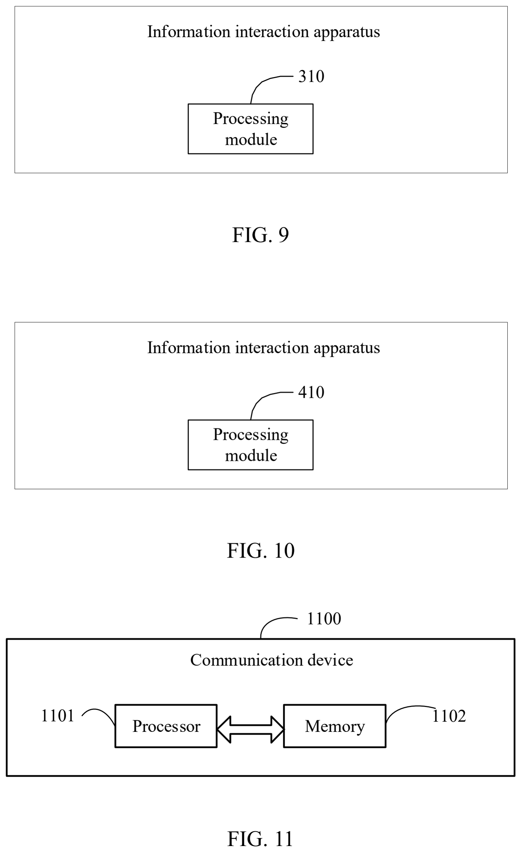

FIG. 9 is a second schematic structural diagram of an information interaction apparatus according to an embodiment of this application. As shown in FIG. 9, the information interaction apparatus provided in this embodiment includes:
a processing module 310, configured to perform a second operation, where
the second operation includes at least one of the following:
   sending third information to a first communication device, where the third information includes information used to indicate at least one of the following: a terminal undergoes an inter-access network device transfer; a first QoS flow undergoes an inter-access network device transfer; the terminal has transferred from a first access network device to a second access network device; the first QoS flow has been transferred from the first access network device to the second access network device; a QoS flow bound to a first data flow has changed; the QoS flow bound to the first data flow has changed from a second QoS flow to the first QoS flow; and the first QoS flow has been established, and the second QoS flow has been released, or resources of the second QoS flow have been released;
   sending fourth information to the first communication device, where the fourth information includes at least one of the following: congestion information corresponding to the first data flow or the second QoS flow, and a QoS notification corresponding to the first data flow or the second QoS flow;
   sending a QoS notification corresponding to the first data flow to the first communication device;
   sending the congestion information corresponding to the first data flow to the first communication device;
   sending information about a second endpoint to the first communication device, including at least one of the following: information about a second endpoint corresponding to a tunnel of the terminal, information about a second endpoint corresponding to the first QoS flow, and information about a second endpoint corresponding to the first data flow;
   sending access network device side information to the first communication device, including at least one of the following: access network device side information of the tunnel of the terminal, access network device side information corresponding to the first QoS flow, and access network device side information corresponding to the first data flow; and
   triggering an N4 modification process.

Optionally, the processing module 310 is specifically configured to:
performing a second operation in a case that a second condition is met; where
the second condition includes at least one of the following:
   a terminal undergoes an inter-access network device transfer, or the terminal has transferred from a first access network device to a second access network device;
   a first QoS flow undergoes an inter-access network device transfer, or the first QoS flow has been transferred from the first access network device to the second access network device; and
   information corresponding to a transferred QoS flow has been received, and the transferred QoS flow includes the first QoS flow;
   a requirement for sending a QoS notification corresponding to the first QoS flow through a user plane tunnel is present; and
   the first QoS flow has been established.

Optionally, in a case that the second condition further includes at least one of the following, sending a QoS notification corresponding to the first data flow to the first communication device, where the QoS notification includes one of the following: QoS can be guaranteed and GFBR can be guaranteed:
information used to indicate or index an alternative QoS profile of the first QoS flow has not been received; where
at least one of the first QoS flow undergoing an inter-access network device transfer and the transferred QoS flow including the first QoS flow is interpreted as obtaining a QoS notification corresponding to the first QoS flow, and the QoS notification corresponding to the first QoS flow including one of the following: QoS can be guaranteed, and GFBR can be guaranteed.

Optionally, in a case that the second condition further includes the following case, sending a QoS notification corresponding to the first data flow to the first communication device, where the QoS notification includes one of the following: QoS cannot be guaranteed, and GFBR cannot be guaranteed:
information used to indicate or index an alternative QoS profile of the first QoS flow has been received.

Optionally, the congestion information corresponding to the first data flow is information indicating at least one of the following:
no congestion, a congestion situation being a minimum value, a percentage of congestion situation being a minimum value, and the congestion situation being zero or the percentage of congestion situation being zero; and
not performing congestion marking on data packets, the number or a percentage of data packets required to be marked for congestion being a minimum value, and performing congestion marking on zero data packets or zero percent of data packets.

Optionally, the congestion information corresponding to the first data flow is sent to the first communication device in a case that the second condition further includes at least one of the following:
information used to indicate or index an alternative QoS profile of the first QoS flow has not been received; where
the congestion information corresponding to the first data flow is information indicating at least one of the following:
   no congestion, a congestion situation being a minimum value, a percentage of congestion situation being a minimum value, and the congestion situation being zero or the percentage of congestion situation being zero; and
   not performing congestion marking on data packets, the number or a percentage of data packets required to be marked for congestion being a minimum value, and performing congestion marking on zero data packets or zero percent of data packets.

Optionally, the second condition further includes at least one of the following:
a requirement for monitoring first information corresponding to the first QoS flow is present;
a first requirement corresponding to the first QoS flow is present;
a second requirement corresponding to the first QoS flow is present; and
the second endpoint corresponding to the first QoS flow has not changed.

The first requirement corresponding to the first QoS flow is used to require the first communication device to obtain reported first information from a user plane tunnel.

The second requirement corresponding to the first QoS flow is used for at least one of the following:
requiring an access network device to monitor second information corresponding to the first QoS flow; and
requiring an access network device to report first information corresponding to the first QoS flow through a user plane tunnel.

Optionally, the first information or second information is information supported for disclosure by an access network device.

Optionally, the first information, the second information, or the information supported for disclosure by the access network device includes at least one of the following: a QoS notification of a QoS flow, and congestion information of the QoS flow.

Optionally, the fourth information includes information indicating at least one of the following:
congestion information corresponding to the first data flow or the second QoS flow; and
QoS notification corresponding to the first data flow or the second QoS flow; where
the first data flow is a data flow bound to the first QoS flow.

Optionally, the congestion information of the QoS flow includes at least one of the following: a percentage corresponding to the congestion information, information about data packets required to be marked for congestion, and congestion situation information.

Optionally, a QoS notification of the QoS flow includes one of the following: QoS of the QoS flow can be guaranteed, QoS of the QoS flow cannot be guaranteed, GFBR of the QoS flow cannot be guaranteed, and GFBR of the QoS flow can be guaranteed.

Optionally, QoS includes at least one of the following: guaranteed flow bit rate GFBR, packet error rate PER, packet delay budget PDB, packet set error rate PSER, and packet set delay budget PSDB.

The apparatus in this embodiment can be configured to execute the method in any one of the aforementioned method embodiments on the second communication device side, and its specific implementation processes and technical effects are similar to those in the method embodiments on the second communication device side. For details, refer to the detailed description in the method embodiments on the second communication device side. Details are not repeated here.

FIG. 10 is a third schematic structural diagram of an information interaction apparatus according to an embodiment of this application. As shown in FIG. 10, the information interaction apparatus provided in this embodiment includes:
a processing module 410, configured to perform a third operation in a case that a third condition is met; where
the third condition includes at least one of the following:
   a terminal undergoes an inter-access network device transfer, or the terminal has transferred from a first access network device to a second access network device;
   a first QoS flow undergoes an inter-access network device transfer, or the first QoS flow has been transferred from the first access network device to the second access network device; and
   the first QoS flow has been established; where
   the third operation includes at least one of the following:
      sending first information through a user plane tunnel corresponding to the first QoS flow;
      sending a QoS notification through the user plane tunnel corresponding to the first QoS flow, or sending a QoS notification corresponding to the first QoS flow;
      sending congestion information through the user plane tunnel corresponding to the first QoS flow, or sending congestion information corresponding to the first QoS flow;
      sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
      sending information indicating one of the following through the user plane tunnel corresponding to the first QoS flow: not performing congestion marking on data packets, the number or a percentage of data packets required to be marked for congestion being a minimum value, and performing congestion marking on zero data packets or zero percent of data packets.

Optionally, in a case that the third condition further includes an alternative QoS profile of the first QoS flow not being applied, the third operation includes at least one of the following:
sending a QoS notification through the user plane tunnel corresponding to the first QoS flow, where the QoS notification includes one of the following: QoS can be guaranteed, and GFBR can be guaranteed;
sending a QoS notification corresponding to the first QoS flow, where the QoS notification includes one of the following: QoS can be guaranteed, and GFBR can be guaranteed;
sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
sending, through the user plane tunnel corresponding to the first QoS flow, information indicating one of the following: not performing congestion marking on data packets, the number or a percentage of data packets required to be marked for congestion being a minimum value, and performing congestion marking on zero data packets or zero percent of data packets; and
sending congestion information corresponding to the first QoS flow; where
the congestion includes information indicating at least one of the following:
   no congestion, a congestion situation being a minimum value, a corresponding percentage of the congestion situation being a minimum value, and the congestion situation being zero or the corresponding percentage of the congestion situation being zero; and
   not performing congestion marking on data packets, the number or a percentage of data packets required to be marked for congestion being a minimum value, and performing congestion marking on zero data packets or zero percent of data packets.

Optionally, in a case that the third condition further includes an alternative QoS profile of the first QoS flow being applied, the third operation includes:
sending a QoS notification through the user plane tunnel corresponding to the first QoS flow, where the QoS notification includes one of the following: QoS cannot be guaranteed, and GFBR cannot be guaranteed.

Optionally, the third condition further includes at least one of the following:
QoS of the first QoS flow can be guaranteed, or the first QoS flow has been successfully transferred to a second access network device; and
a requirement for monitoring first information corresponding to the first QoS flow is present, and a second requirement corresponding to the first QoS flow is present.

The second requirement corresponding to the first QoS flow is used to require at least one of the following:
requiring an access network device to monitor second information corresponding to the first QoS flow; and
requiring an access network device to report first information corresponding to the first QoS flow through a user plane tunnel.

Optionally, the first information or second information is information supported for disclosure by an access network device.

Optionally, the first information, the second information, or the information supported for disclosure by the access network device includes at least one of the following: a QoS notification of a QoS flow, and congestion information of the QoS flow.

Optionally, the congestion information of the QoS flow includes at least one of the following: a percentage corresponding to the congestion information, information about data packets required to be marked for congestion, and congestion situation information.

Optionally, a percentage corresponding to the congestion information includes at least one of the following: the percentage corresponding to the congestion situation, and a percentage of data packets required to be marked for congestion relative to all data packets.

Optionally, a QoS notification of the QoS flow includes one of the following: QoS of the QoS flow can be guaranteed, QoS of the QoS flow cannot be guaranteed, guaranteed flow bit rate GFBR of the QoS flow cannot be guaranteed, and GFBR of the QoS flow can be guaranteed.

Optionally, QoS includes at least one of the following: guaranteed flow bit rate GFBR, packet error rate PER, packet delay budget PDB, packet set error rate PSER, and packet set delay budget PSDB.

The apparatus in this embodiment can be configured to execute the method in any one of the aforementioned method embodiments on the third communication device side, and its specific implementation processes and technical effects are similar to those in the method embodiments on the third communication device side. For details, refer to the detailed description in the method embodiments on the third communication device side. Details are not repeated here.

The information interaction apparatus in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The information interaction apparatus provided in this embodiment of this application can implement the processes implemented in the method embodiments in FIG. 3 to FIG. 7, with the same technical effects achieved. To avoid repetition, details are not described herein again.

Optionally, as shown in FIG. 11, an embodiment of this application further provides a communication device 1100, including a processor 1101 and a memory 1102. A program or instructions capable of running executing on the processor 1101 are stored in the memory 1102. For example, when the communication device 1100 is a terminal and when the program or the instructions are executed by the processor 1101, the steps of the foregoing embodiments of the information interaction method are implemented, with the same technical effects achieved. When the communication device 1100 is a network-side device and when the program or the instructions are executed by the processor 1101, the steps of the foregoing embodiments of the information interaction method are implemented, with the same technical effects achieved. To avoid repetition, details are not described herein again.

An embodiment of this application further provides a third communication device, which includes a processor and a communication interface, where the processor is configured to perform a third operation in a case that a third condition is met; where the third condition includes at least one of the following:
a terminal undergoes an inter-access network device transfer, or the terminal has transferred from a first access network device to a second access network device;
a first QoS flow undergoes an inter-access network device transfer, or the first QoS flow has been transferred from the first access network device to the second access network device; and
the first QoS flow has been established; where
the third operation includes at least one of the following:
   sending first information through a user plane tunnel corresponding to the first QoS flow;
   sending a QoS notification through the user plane tunnel corresponding to the first QoS flow, or sending a QoS notification corresponding to the first QoS flow;
   sending congestion information through the user plane tunnel corresponding to the first QoS flow, or sending congestion information corresponding to the first QoS flow;
   sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
   sending information indicating one of the following through the user plane tunnel corresponding to the first QoS flow: not performing congestion marking on data packets, the number or a percentage of data packets required to be marked for congestion being a minimum value, and performing congestion marking on zero data packets or zero percent of data packets. The third communication device side embodiments correspond to the foregoing third communication device side method embodiments, and the implementation processes and implementations of the foregoing method embodiments can be applied to the third communication device side embodiments, with the same technical effects achieved.

Optionally, the third communication device is a network-side device.

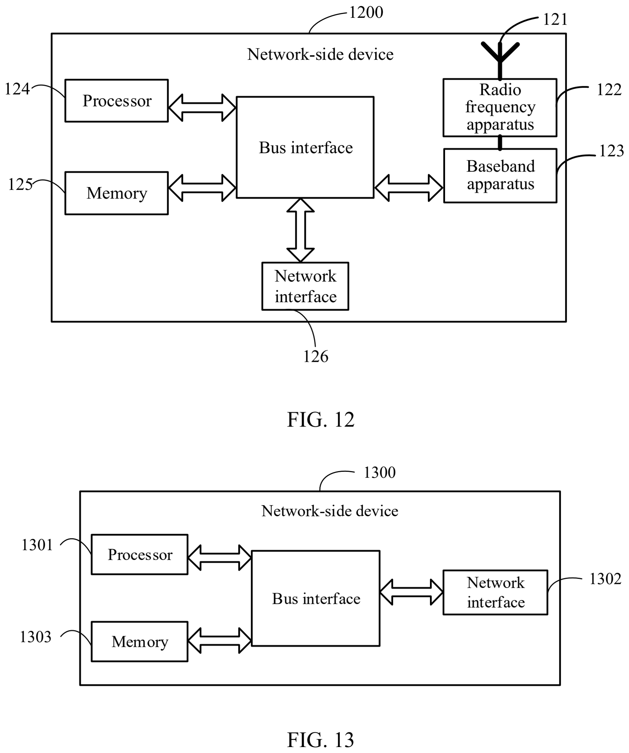

Specifically, an embodiment of this application further provides a network-side device. As shown in FIG. 12, the network-side device 1200 includes an antenna 121, a radio frequency apparatus 122, a baseband apparatus 123, a processor 124, and memory 125. The antenna 121 is connected to the radio frequency apparatus 122. In an uplink direction, the radio frequency apparatus 122 receives information by using the antenna 121, and sends the received information to the baseband apparatus 123 for processing. Downlink, the baseband apparatus 123 processes to-be-sent information, and sends the information to the radio frequency apparatus 122; and the radio frequency apparatus 122 processes the received information and then sends the information out through the antenna 121.

The method executed by the network-side device in the foregoing embodiments may be implemented on the baseband apparatus 123. The baseband apparatus 123 includes a baseband processor.

The baseband apparatus 123 may include, for example, at least one baseband board, where a plurality of chips are disposed on the baseband board. As shown in FIG. 12, one of the chips is, for example, the baseband processor, and connected to the memory 125 through a bus interface, to invoke the program in the memory 125 to perform the operations of the network device shown in the foregoing method embodiment.

The network-side device may further include a network interface 126, where the interface is, for example, a common public radio interface (Common Public Radio Interface, CPRI).

Specifically, the network-side device 1200 according to this embodiment of this application further includes instructions or programs stored in the memory 125 and capable of running executing on the processor 124, and the processor 124 calls the instructions or programs in the memory 125 to execute the methods performed by the modules shown in FIG. 10, with the same technical effects achieved. To avoid repetition, details are not described herein again.

An embodiment of this application further provides a first communication device, which includes a processor and a communication interface, where the processor is configured to perform a first operation, including at least one of the following:
in a case that a first condition is met, the first communication device performs a first sub-operation;
the first communication device obtains fourth information, and the first communication device performs a second sub-operation based on the fourth information;
the first communication device receives a QoS notification corresponding to a first data flow from a second communication device, and the first communication device sends a QoS notification corresponding to a first QoS flow or the first data flow based on the obtained QoS notification corresponding to the first data flow; and
the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow.

The first condition being met includes at least one of the following:
a terminal undergoes an inter-access network device transfer, or the terminal has transferred from a first access network device to a second access network device;
the first quality of service QoS flow undergoes an inter-access network device transfer, or the first QoS flow has been transferred from the first access network device to the second access network device;
a QoS flow bound to the first data flow has changed, or the QoS flow bound to the first data flow has changed from a second QoS flow to the first QoS flow;
the first QoS flow has been established, and the second QoS flow has been released, or resources of the second QoS flow have been released;
a second endpoint corresponding to a tunnel of the terminal has changed, a second endpoint corresponding to the first QoS flow has changed, and/or a second endpoint corresponding to the first data flow has changed;
access network device side information for the tunnel of the terminal has changed, or access network device side information corresponding to the first QoS flow has changed, and/or access network device side information corresponding to the first data flow has changed;
third information has been obtained, where the third information includes information used to indicate at least one of the following: the terminal undergoes an inter-access network device transfer; the first QoS flow undergoes an inter-access network device transfer; the terminal has transferred from the first access network device to the second access network device; the first QoS flow has been transferred from the first access network device to the second access network device; the QoS flow bound to the first data flow has changed; the QoS flow bound to the first data flow has changed from the second QoS flow to the first QoS flow; and the first QoS flow has been established, and the second QoS flow has been released, or resources of the second QoS flow have been released;
information about a second endpoint has been obtained, including at least one of the following: information about the second endpoint corresponding to the tunnel of the terminal, information about the second endpoint corresponding to the first QoS flow, and information about the second endpoint corresponding to the first data flow; and
access network device side information has been obtained, including at least one of the following: access network device side information of the tunnel of the terminal, access network device side information corresponding to the first QoS flow, and access network device side information corresponding to the first data flow.

The second endpoint corresponding to the first QoS flow is one of the following: a target endpoint sending traffic of the first QoS flow, and a source endpoint receiving traffic of the first QoS flow.

The first sub-operation includes at least one of the following:
determining that QoS of the first QoS flow can be guaranteed; and determining that GFBR of the first QoS flow can be guaranteed;
interpreting at least one of the obtaining third information, obtaining information about the second endpoint, and/or obtaining access network device side information as obtaining a QoS notification corresponding to the first QoS flow, where the QoS notification corresponding to the first QoS flow includes one of the following: QoS can be guaranteed, and GFBR can be guaranteed;
determining that the first QoS flow has no congestion;
determining not to perform congestion marking on data packets of the first QoS flow;
determining that congestion information of the first QoS flow is information used to indicate one of the following: no congestion, a congestion situation being a minimum value, a percentage of congestion situation being a minimum value, and the congestion situation being zero or the percentage of congestion situation being zero;
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no congestion, a congestion situation being a minimum value, a corresponding percentage of the congestion situation being a minimum value, and the congestion situation being zero or the corresponding percentage of the congestion situation being zero;
determining that the congestion information of the first QoS flow is information used to indicate one of the following: not performing congestion marking on data packets, the number or a percentage of data packets required to be marked for congestion being a minimum value, and performing congestion marking on zero data packets or zero percent of data packets; and
interpreting at least one of the obtaining third information, obtaining information about the second endpoint, and/or obtaining access network device side information as obtaining congestion information corresponding to the first QoS flow, where the congestion information corresponding to the first QoS flow is information used to indicate one of the following: no longer performing congestion marking on data packets, the number of data packets required to be marked for congestion being a minimum value, performing congestion marking on zero data packets or zero percent of data packets.

The second sub-operation includes at least one of the following:
sending a QoS notification corresponding to the first QoS flow or the first data flow; and
sending congestion information corresponding to the first QoS flow or the first data flow.

The first communication device side embodiments correspond to the foregoing first communication device side method embodiments, and the implementation processes and implementations of the foregoing method embodiments can be applied to the first communication device side embodiments, with the same technical effects achieved.

An embodiment of this application further provides a second communication device, which includes a processor and a communication interface, where the processor is configured to perform a second operation.

The second operation includes at least one of the following:
sending third information to a first communication device, where the third information includes information used to indicate at least one of the following: a terminal undergoes an inter-access network device transfer; a first QoS flow undergoes an inter-access network device transfer; the terminal has transferred from a first access network device to a second access network device; the first QoS flow has been transferred from the first access network device to the second access network device; a QoS flow bound to a first data flow has changed; the QoS flow bound to the first data flow has changed from a second QoS flow to the first QoS flow; and the first QoS flow has been established, and the second QoS flow has been released, or resources of the second QoS flow have been released;
sending fourth information to the first communication device, where the fourth information includes at least one of the following: congestion information corresponding to the first data flow or the second QoS flow, and a QoS notification corresponding to the first data flow or the second QoS flow;
sending a QoS notification corresponding to the first data flow to the first communication device;
sending the congestion information corresponding to the first data flow to the first communication device;
sending information about a second endpoint to the first communication device, including at least one of the following: information about a second endpoint corresponding to a tunnel of the terminal, information about a second endpoint corresponding to the first QoS flow, and information about a second endpoint corresponding to the first data flow;
sending access network device side information to the first communication device, including at least one of the following: access network device side information of the tunnel of the terminal, access network device side information corresponding to the first QoS flow, and access network device side information corresponding to the first data flow; and
triggering an N4 modification process.

The first communication device side embodiments correspond to the foregoing second communication device side method embodiments, and the implementation processes and implementations of the foregoing method embodiments can be applied to the second communication device-side embodiments, with the same technical effects achieved.

Optionally, the first communication device or the second communication device is a network-side device.

Specifically, an embodiment of this application further provides a network-side device. As shown in FIG. 13, the network-side device 1300 includes a processor 1301, a network interface 1302, and a memory 1303. The network interface 1302 is, for example, a common public radio interface (common public radio interface, CPRI).

Specifically, the network-side device 1300 in this embodiment of this application further includes: instructions or a program stored in the memory 1303 and capable of running executing on the processor 1301. The processor 1301 invokes the instructions or program in the memory 1303 to execute the method executed by the modules shown in FIG. 8 or FIG. 9, with the same technical effects achieved. To avoid repetition, details are not described herein again.

An embodiment of this application further provides a readable storage medium. The readable storage medium stores a program or instructions. When the program or instructions are executed by a processor, the processes of the foregoing embodiments of the information interaction method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface. The communication interface is coupled to the processor, and the processor is configured to run a program or instructions to implement the processes of the foregoing embodiments of the information interaction method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the information interaction method, with the same technical effects achieved. To avoid repetition, details are not repeated herein.

An embodiment of this application further provides a communication system, which includes a first communication device, a second communication device and a third communication device, where the first communication device can be configured to execute the steps of the information interaction method as described above, the second communication device can be configured to execute the steps of the information interaction method as described above, and the third communication device can be configured to execute the steps of the information interaction method as described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a ..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. An information interaction method, comprising:
performing, by a first communication device, a first operation, comprising at least one of the following:
in a case that a first condition is met, the first communication device performs a first sub-operation;
the first communication device obtains fourth information, and the first communication device performs a second sub-operation based on the fourth information;
the first communication device receives a QoS notification corresponding to a first data flow from a second communication device, and the first communication device sends a QoS notification corresponding to a first QoS flow or the first data flow based on the obtained QoS notification corresponding to the first data flow; and
the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow; wherein
the first condition being met comprises at least one of the following:
a terminal undergoes an inter-access network device transfer, or the terminal has transferred from a first access network device to a second access network device;
the first quality of service QoS flow undergoes an inter-access network device transfer, or the first QoS flow has been transferred from the first access network device to the second access network device;
a QoS flow bound to the first data flow has changed, or the QoS flow bound to the first data flow has changed from a second QoS flow to the first QoS flow;
the first QoS flow has been established, and the second QoS flow has been released, or resources of the second QoS flow have been released;
a second endpoint corresponding to a tunnel of the terminal has changed, a second endpoint corresponding to the first QoS flow has changed, and/or a second endpoint corresponding to the first data flow has changed;
access network device side information for the tunnel of the terminal has changed, or access network device side information corresponding to the first QoS flow has changed, and/or access network device side information corresponding to the first data flow has changed;
third information has been obtained, wherein the third information comprises information used to indicate at least one of the following: the terminal undergoes an inter-access network device transfer; the first QoS flow undergoes an inter-access network device transfer; the terminal has transferred from the first access network device to the second access network device; the first QoS flow has been transferred from the first access network device to the second access network device; the QoS flow bound to the first data flow has changed; the QoS flow bound to the first data flow has changed from the second QoS flow to the first QoS flow; and the first QoS flow has been established, and the second QoS flow has been released, or resources of the second QoS flow have been released;
information about a second endpoint has been obtained, comprising at least one of the following: information about the second endpoint corresponding to the tunnel of the terminal, information about the second endpoint corresponding to the first QoS flow, and information about the second endpoint corresponding to the first data flow; and
access network device side information has been obtained, comprising at least one of the following: access network device side information of the tunnel of the terminal, access network device side information corresponding to the first QoS flow, and access network device side information corresponding to the first data flow;
wherein
the second endpoint corresponding to the first QoS flow is one of the following: a target endpoint sending traffic of the first QoS flow, and a source endpoint receiving traffic of the first QoS flow;
the first sub-operation comprises at least one of the following:
determining that QoS of the first QoS flow can be guaranteed; and determining that GFBR of the first QoS flow can be guaranteed;
interpreting at least one of the obtaining third information, obtaining information about the second endpoint, and/or obtaining access network device side information as obtaining a QoS notification corresponding to the first QoS flow, wherein the QoS notification corresponding to the first QoS flow comprises one of the following: QoS can be guaranteed, and GFBR can be guaranteed;
determining that the first QoS flow has no congestion;
determining not to perform congestion marking on data packets of the first QoS flow;
determining that congestion information of the first QoS flow is information used to indicate one of the following: no congestion, a congestion situation being a minimum value, a percentage of congestion situation being a minimum value, and the congestion situation being zero or the percentage of congestion situation being zero;
interpreting at least one of the obtaining third information, obtaining information about the second endpoint, and/or obtaining access network device side information as obtaining congestion information corresponding to the first QoS flow, wherein the congestion information corresponding to the first QoS flow is information used to indicate one of the following: no congestion, a congestion situation being a minimum value, a corresponding percentage of the congestion situation being a minimum value, and the congestion situation being zero or the corresponding percentage of the congestion situation being zero;
determining that the congestion information of the first QoS flow is information used to indicate one of the following: not performing congestion marking on data packets, the number or a percentage of data packets required to be marked for congestion being a minimum value, and performing congestion marking on zero data packets or zero percent of data packets; and
interpreting at least one of the obtaining third information, obtaining information about the second endpoint, and/or obtaining access network device side information as obtaining congestion information corresponding to the first QoS flow, wherein the congestion information corresponding to the first QoS flow is information used to indicate one of the following: no longer performing congestion marking on data packets, the number of data packets required to be marked for congestion being a minimum value, performing congestion marking on zero data packets or zero percent of data packets; and
the second sub-operation comprises at least one of the following:
sending a QoS notification corresponding to the first QoS flow or the first data flow; and
sending congestion information corresponding to the first QoS flow or the first data flow.

2. The method according to claim 1, wherein the meeting the first condition further comprises at least one of the following:
the first QoS flow has not been released;
the resources of the first QoS flow have not been released;
a requirement for monitoring first information corresponding to the first QoS flow is present; and
a first requirement corresponding to the first QoS flow is present;
wherein
the first requirement corresponding to the first QoS flow is used to require the first communication device to obtain reported first information from a user plane tunnel.

3. The method according to claim 2, wherein the first information or second information is information supported for disclosure by an access network device.

4. The method according to claim 3, wherein the first information, the second information, or the information supported for disclosure by the access network device comprises at least one of the following: a QoS notification of a QoS flow, and congestion information of the QoS flow.

5. The method according to claim 4, wherein the congestion information of the QoS flow comprises at least one of the following: a percentage corresponding to the congestion information, information about data packets required to be marked for congestion, and congestion situation information.

6. The method according to any one of claims 1 to 5, wherein the meeting the first condition further comprises at least one of the following:
congestion information corresponding to the first QoS flow has not been received.

7. The method according to claim 1, wherein the fourth information comprises information used to indicate at least one of the following: congestion information corresponding to the first data flow or the second QoS flow, and a QoS notification corresponding to the first data flow or the second QoS flow; wherein the first data flow is a data flow bound to the first QoS flow.

8. The method according to claim 7, wherein the first communication device performing the second sub-operation based on the fourth information comprises: sending a QoS notification corresponding to the first data flow or the first QoS flow based on the fourth information in a case that a fourth condition is met, wherein the QoS notification comprises one of the following: QoS can be guaranteed again, and GFBR can be guaranteed again; wherein
the fourth condition comprises at least one of the following:
QoS of the first QoS flow can be guaranteed or GFBR can be guaranteed; and
the fourth information comprises a QoS notification of the first data flow or the second QoS flow, and the QoS notification comprises one of the following: QoS cannot be guaranteed, and GFBR cannot be guaranteed.

9. The method according to claim 7, wherein the first communication device performing the second sub-operation based on the fourth information comprises: in a case that a fifth condition is met, sending, based on the fourth information, congestion information corresponding to the first data flow or the first QoS flow, wherein the congestion information comprises information used to indicate no congestion any longer or zero congestion; wherein
the fifth condition comprises at least one of the following:
the fourth information comprises congestion information of the first data flow or the second QoS flow, and the congestion information comprises information for indicating congestion or does not comprise information for indicating no congestion; and
the first QoS flow has no congestion.

10. The method according to any one of claims 1 to 9, wherein,
a percentage corresponding to the congestion information comprises at least one of the following: the percentage corresponding to the congestion situation, and a percentage of data packets required to be marked for congestion relative to all data packets.

11. The method according to claim 1, 4, or 5, wherein a QoS notification of the QoS flow comprises one of the following: QoS of the QoS flow can be guaranteed, QoS of the QoS flow cannot be guaranteed, guaranteed flow bit rate GFBR of the QoS flow cannot be guaranteed, and GFBR of the QoS flow can be guaranteed.

12. The method according to claim 1, 4, 5, or 8, wherein,
QoS comprises at least one of the following: guaranteed flow bit rate GFBR, packet error rate PER, packet delay budget PDB, packet set error rate PSER, and packet set delay budget PSDB.

13. The method according to any one of claims 1 to 5, wherein the sending a QoS notification corresponding to the first QoS flow or the first data flow comprises:
in a case of determining that QoS of a QoS flow can be guaranteed again, the first communication device sends, to a target device subscribing to the QoS notification, a QoS notification corresponding to the first QoS flow or the first data flow, and the QoS notification corresponding to the first QoS flow or the first data flow comprises one of the following: QoS can be guaranteed, and GFBR can be guaranteed;
in a case of determining that PER of a QoS flow can be guaranteed again, the first communication device sends, to a target device subscribing to a QoS notification, information indicating that PER can be guaranteed;
in a case of determining that PDB of a QoS flow can be guaranteed again, the first communication device sends, to a target device subscribing to a QoS notification, information indicating that PDB can be guaranteed;
in a case of determining that PSER of a QoS flow can be guaranteed again, the first communication device sends, to a target device subscribing to a QoS notification, information indicating that PSER can be guaranteed; and
in a case of determining that PSDB of a QoS flow can be guaranteed again, the first communication device sends, to a target device subscribing to a QoS notification, information indicating that PSDB can be guaranteed; wherein
the first data flow is a data flow bound to the first QoS flow.

14. The method according to any one of claims 1 to 5, wherein the method further comprises: determining, by the first communication device based on at least one of the following, that the terminal undergoes an inter-access network device transfer and/or the terminal has transferred from the first access network device to the second access network device:
information indicating at least one of the following has been received: the terminal undergoes an inter-access network device transfer, or the terminal has transferred from the first access network device to the second access network device;
the information about the second endpoint corresponding to the tunnel of the terminal has been received; and
the access network device side information of the tunnel of the terminal has been received.

15. The method according to any one of claims 1 to 5, wherein the first communication device determines that the first QoS flow undergoes an inter-access network device transfer and/or the first QoS flow has been transferred from the first access network device to the second access network device, based on at least one of the following:
the third information has been obtained;
the information about the second endpoint has been obtained, comprising at least one of the following: information about the second endpoint corresponding to the tunnel of the terminal, information about the second endpoint corresponding to the first QoS flow, and information about the second endpoint corresponding to the first data flow;
the access network device side information has been obtained, comprising at least one of the following: access network device side information of the tunnel of the terminal, access network device side information corresponding to the first QoS flow, and access network device side information corresponding to the first data flow; and
in a case of determining that the terminal undergoes an inter-access network device transfer or the terminal has transferred from the first access network device to the second access network device, the first QoS flow has not been released or the resources of the first QoS flow have not been released.

16. An information interaction method, comprising:
performing, by a second communication device, a second operation; wherein
the second operation comprises at least one of the following:
sending third information to a first communication device, wherein the third information comprises information used to indicate at least one of the following: a terminal undergoes an inter-access network device transfer; a first QoS flow undergoes an inter-access network device transfer; the terminal has transferred from a first access network device to a second access network device; the first QoS flow has been transferred from the first access network device to the second access network device; a QoS flow bound to a first data flow has changed; the QoS flow bound to the first data flow has changed from a second QoS flow to the first QoS flow; and the first QoS flow has been established, and the second QoS flow has been released, or resources of the second QoS flow have been released;
sending fourth information to the first communication device, wherein the fourth information comprises at least one of the following: congestion information corresponding to the first data flow or the second QoS flow, and a QoS notification corresponding to the first data flow or the second QoS flow;
sending a QoS notification corresponding to the first data flow to the first communication device;
sending the congestion information corresponding to the first data flow to the first communication device;
sending information about a second endpoint to the first communication device, comprising at least one of the following: information about a second endpoint corresponding to a tunnel of the terminal, information about a second endpoint corresponding to the first QoS flow, and information about a second endpoint corresponding to the first data flow;
sending access network device side information to the first communication device, comprising at least one of the following: access network device side information of the tunnel of the terminal, access network device side information corresponding to the first QoS flow, and access network device side information corresponding to the first data flow; and
triggering an N4 modification process.

17. The method according to claim 16, wherein the performing, by a second communication device, a second operation comprises: performing, by the second communication device, the second operation in a case that a second condition is met; wherein
the second condition comprises at least one of the following:
a terminal undergoes an inter-access network device transfer, or the terminal has transferred from a first access network device to a second access network device;
a first QoS flow undergoes an inter-access network device transfer, or the first QoS flow has been transferred from the first access network device to the second access network device;
information corresponding to a transferred QoS flow has been received, and the transferred QoS flow comprises the first QoS flow;
a requirement for sending a QoS notification corresponding to the first QoS flow through a user plane tunnel is present; and
the first QoS flow has been established.

18. The method according to claim 17, wherein
in a case that the second condition further comprises at least one of the following, sending a QoS notification corresponding to the first data flow to the first communication device, wherein the QoS notification comprises one of the following: QoS can be guaranteed and GFBR can be guaranteed:
information used to indicate or index an alternative QoS profile of the first QoS flow has not been received; wherein
at least one of the first QoS flow undergoing an inter-access network device transfer and the transferred QoS flow comprising the first QoS flow is interpreted as obtaining a QoS notification corresponding to the first QoS flow, and the QoS notification corresponding to the first QoS flow comprising one of the following: QoS can be guaranteed, and GFBR can be guaranteed.

19. The method according to claim 17 or 18, wherein
in a case that the second condition further comprises the following case, sending a QoS notification corresponding to the first data flow to the first communication device, wherein the QoS notification comprises one of the following: QoS cannot be guaranteed, and GFBR cannot be guaranteed:
information used to indicate or index an alternative QoS profile of the first QoS flow has been received.

20. The method according to any one of claims 16 to 19, wherein the congestion information corresponding to the first data flow is information indicating at least one of the following:
no congestion, a congestion situation being a minimum value, a percentage of congestion situation being a minimum value, and the congestion situation being zero or the percentage of congestion situation being zero; and
not performing congestion marking on data packets, the number or a percentage of data packets required to be marked for congestion being a minimum value, and performing congestion marking on zero data packets or zero percent of data packets.

21. The method according to claim 17 or 18, wherein
the congestion information corresponding to the first data flow is sent to the first communication device in a case that the second condition further comprises at least one of the following:
information used to indicate or index an alternative QoS profile of the first QoS flow has not been received; wherein
the congestion information corresponding to the first data flow is information indicating at least one of the following:
no congestion, a congestion situation being a minimum value, a percentage of congestion situation being a minimum value, and the congestion situation being zero or the percentage of congestion situation being zero; and
not performing congestion marking on data packets, the number or a percentage of data packets required to be marked for congestion being a minimum value, and performing congestion marking on zero data packets or zero percent of data packets.

22. The method according to any one of claims 17 to 19, wherein
the second condition further comprises at least one of the following:
a requirement for monitoring first information corresponding to the first QoS flow is present;
a first requirement corresponding to the first QoS flow is present;
a second requirement corresponding to the first QoS flow is present; and
the second endpoint corresponding to the first QoS flow has not changed;
wherein
the first requirement corresponding to the first QoS flow is used to require the first communication device to obtain reported first information from a user plane tunnel; and
the second requirement corresponding to the first QoS flow is used for at least one of the following:
requiring an access network device to monitor second information corresponding to the first QoS flow; and
requiring an access network device to report first information corresponding to the first QoS flow through a user plane tunnel.

23. The method according to claim 22, wherein the first information or second information is information supported for disclosure by an access network device.

24. The method according to any one of claims 16 to 23, wherein the first information, the second information, or the information supported for disclosure by the access network device comprises at least one of the following: a QoS notification of a QoS flow, and congestion information of the QoS flow.

25. The method according to claim 16, wherein the fourth information comprises information indicating at least one of the following:
congestion information corresponding to the first data flow or the second QoS flow; and
QoS notification corresponding to the first data flow or the second QoS flow; wherein
the first data flow is a data flow bound to the first QoS flow.

26. The method according to claim 25, wherein the congestion information of the QoS flow comprises at least one of the following: a percentage corresponding to the congestion information, information about data packets required to be marked for congestion, and congestion situation information.

27. The method according to claim 25 or 26, wherein a QoS notification of the QoS flow comprises one of the following: QoS of the QoS flow can be guaranteed, QoS of the QoS flow cannot be guaranteed, GFBR of the QoS flow cannot be guaranteed, and GFBR of the QoS flow can be guaranteed.

28. The method according to any one of claims 25 to 27, wherein,
QoS comprises at least one of the following: guaranteed flow bit rate GFBR, packet error rate PER, packet delay budget PDB, packet set error rate PSER, and packet set delay budget PSDB.

29. An information interaction method, comprising:
in a case that a third condition is met, performing, by a third communication device, a third operation; wherein
the third condition comprises at least one of the following:
a terminal undergoes an inter-access network device transfer, or the terminal has transferred from a first access network device to a second access network device;
a first QoS flow undergoes an inter-access network device transfer, or the first QoS flow has been transferred from the first access network device to the second access network device; and
the first QoS flow has been established; wherein
the third operation comprises at least one of the following:
sending first information through a user plane tunnel corresponding to the first QoS flow;
sending a QoS notification through the user plane tunnel corresponding to the first QoS flow, or sending a QoS notification corresponding to the first QoS flow;
sending congestion information through the user plane tunnel corresponding to the first QoS flow, or sending congestion information corresponding to the first QoS flow;
sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
sending information indicating one of the following through the user plane tunnel corresponding to the first QoS flow: not performing congestion marking on data packets, the number or a percentage of data packets required to be marked for congestion being a minimum value, and performing congestion marking on zero data packets or zero percent of data packets.

30. The method according to claim 29, wherein
in a case that the third condition further comprises an alternative QoS profile of the first QoS flow not being applied, the third operation comprises at least one of the following:
sending a QoS notification through the user plane tunnel corresponding to the first QoS flow, wherein the QoS notification comprises one of the following: QoS can be guaranteed, and GFBR can be guaranteed;
sending a QoS notification corresponding to the first QoS flow, wherein the QoS notification comprises one of the following: QoS can be guaranteed, and GFBR can be guaranteed;
sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero;
sending, through the user plane tunnel corresponding to the first QoS flow, information indicating one of the following: not performing congestion marking on data packets, the number or a percentage of data packets required to be marked for congestion being a minimum value, and performing congestion marking on zero data packets or zero percent of data packets; and
sending congestion information corresponding to the first QoS flow;
wherein
the congestion comprises information indicating at least one of the following:
no congestion, a congestion situation being a minimum value, a corresponding percentage of the congestion situation being a minimum value, and the congestion situation being zero or the corresponding percentage of the congestion situation being zero; and
not performing congestion marking on data packets, the number or a percentage of data packets required to be marked for congestion being a minimum value, and performing congestion marking on zero data packets or zero percent of data packets.

31. The method according to claim 29 or 30, wherein
in a case that the third condition further comprises an alternative QoS profile of the first QoS flow being applied, the third operation comprises:
sending a QoS notification through the user plane tunnel corresponding to the first QoS flow, wherein the QoS notification comprises one of the following: QoS cannot be guaranteed, and GFBR cannot be guaranteed.

32. The method according to any one of claims 28 to 31, wherein the third condition further comprises at least one of the following:
QoS of the first QoS flow can be guaranteed, or the first QoS flow has been successfully transferred to a second access network device; and
a requirement for monitoring first information corresponding to the first QoS flow is present, and a second requirement corresponding to the first QoS flow is present;
wherein
the second requirement corresponding to the first QoS flow is used to require at least one of the following:
requiring an access network device to monitor second information corresponding to the first QoS flow; and
requiring an access network device to report first information corresponding to the first QoS flow through a user plane tunnel.

33. The method according to claim 32, wherein the first information or second information is information supported for disclosure by an access network device.

34. The method according to claim 32 or 33, wherein the first information, the second information, or the information supported for disclosure by the access network device comprises at least one of the following: a QoS notification of a QoS flow, and congestion information of the QoS flow.

35. The method according to claim 34, wherein the congestion information of the QoS flow comprises at least one of the following: a percentage corresponding to the congestion information, information about data packets required to be marked for congestion, and congestion situation information.

36. The method according to claim 35, wherein a percentage corresponding to the congestion information comprises at least one of the following: the percentage corresponding to the congestion situation, and a percentage of data packets required to be marked for congestion relative to all data packets.

37. The method according to any one of claims 34 to 36, wherein a QoS notification of the QoS flow comprises one of the following: QoS of the QoS flow can be guaranteed, QoS of the QoS flow cannot be guaranteed, guaranteed flow bit rate GFBR of the QoS flow cannot be guaranteed, and GFBR of the QoS flow can be guaranteed.

38. The method according to any one of claims 34 to 37, wherein,
QoS comprises at least one of the following: guaranteed flow bit rate GFBR, packet error rate PER, packet delay budget PDB, packet set error rate PSER, and packet set delay budget PSDB.

39. A communication device, wherein the communication device is a first communication device, comprising:
a processing module, configured to perform a first operation, comprising at least one of the following:
in a case that a first condition is met, the first communication device performs a first sub-operation;
the first communication device obtains fourth information, and the first communication device performs a second sub-operation based on the fourth information;
the first communication device receives a QoS notification corresponding to a first data flow from a second communication device, and the first communication device sends a QoS notification corresponding to a first QoS flow or the first data flow based on the obtained QoS notification corresponding to the first data flow; and
the first communication device receives congestion information corresponding to the first data flow from a second communication device, and the first communication device performs at least one of the following based on the obtained congestion information corresponding to the first data flow: disclosing a QoS notification corresponding to the first QoS flow or the first data flow, and performing a congestion marking operation on data packets of the first QoS flow; wherein
the first condition being met comprises at least one of the following:
a terminal undergoes an inter-access network device transfer, or the terminal has transferred from a first access network device to a second access network device;
the first quality of service QoS flow undergoes an inter-access network device transfer, or the first QoS flow has been transferred from the first access network device to the second access network device;
a QoS flow bound to the first data flow has changed, or the QoS flow bound to the first data flow has changed from a second QoS flow to the first QoS flow;
the first QoS flow has been established, and the second QoS flow has been released, or resources of the second QoS flow have been released;
a second endpoint corresponding to a tunnel of the terminal has changed, a second endpoint corresponding to the first QoS flow has changed, and/or a second endpoint corresponding to the first data flow has changed;
access network device side information for the tunnel of the terminal has changed, or access network device side information corresponding to the first QoS flow has changed, and/or access network device side information corresponding to the first data flow has changed;
third information has been obtained, wherein the third information comprises information used to indicate at least one of the following: the terminal undergoes an inter-access network device transfer; the first QoS flow undergoes an inter-access network device transfer; the terminal has transferred from the first access network device to the second access network device; the first QoS flow has been transferred from the first access network device to the second access network device; the QoS flow bound to the first data flow has changed; the QoS flow bound to the first data flow has changed from the second QoS flow to the first QoS flow; and the first QoS flow has been established, and the second QoS flow has been released, or resources of the second QoS flow have been released;
information about a second endpoint has been obtained, comprising at least one of the following: information about the second endpoint corresponding to the tunnel of the terminal, information about the second endpoint corresponding to the first QoS flow, and information about the second endpoint corresponding to the first data flow; and
access network device side information has been obtained, comprising at least one of the following: access network device side information of the tunnel of the terminal, access network device side information corresponding to the first QoS flow, and access network device side information corresponding to the first data flow; wherein
the second endpoint corresponding to the first QoS flow is one of the following: a target endpoint sending traffic of the first QoS flow, and a source endpoint receiving traffic of the first QoS flow;
the first sub-operation comprises at least one of the following:
determining that QoS of the first QoS flow can be guaranteed; and determining that GFBR of the first QoS flow can be guaranteed;
interpreting at least one of the obtaining third information, obtaining information about the second endpoint, and/or obtaining access network device side information as obtaining a QoS notification corresponding to the first QoS flow, wherein the QoS notification corresponding to the first QoS flow comprises one of the following: QoS can be guaranteed, and GFBR can be guaranteed;
determining that the first QoS flow has no congestion;
determining not to perform congestion marking on data packets of the first QoS flow;
determining that congestion information of the first QoS flow is information used to indicate one of the following: no congestion, a congestion situation being a minimum value, a percentage of congestion situation being a minimum value, and the congestion situation being zero or the percentage of congestion situation being zero;
interpreting at least one of the obtaining third information, obtaining information about the second endpoint, and/or obtaining access network device side information as obtaining congestion information corresponding to the first QoS flow, wherein the congestion information corresponding to the first QoS flow is information used to indicate one of the following: no congestion, a congestion situation being a minimum value, a corresponding percentage of the congestion situation being a minimum value, and the congestion situation being zero or the corresponding percentage of the congestion situation being zero;
determining that the congestion information of the first QoS flow is information used to indicate one of the following: not performing congestion marking on data packets, the number or a percentage of data packets required to be marked for congestion being a minimum value, and performing congestion marking on zero data packets or zero percent of data packets; and
interpreting at least one of the obtaining third information, obtaining information about the second endpoint, and/or obtaining access network device side information as obtaining congestion information corresponding to the first QoS flow, wherein the congestion information corresponding to the first QoS flow is information used to indicate one of the following: no longer performing congestion marking on data packets, the number of data packets required to be marked for congestion being a minimum value, performing congestion marking on zero data packets or zero percent of data packets; and
the second sub-operation comprises at least one of the following:
sending a QoS notification corresponding to the first QoS flow or the first data flow; and
sending congestion information corresponding to the first QoS flow or the first data flow.

40. A communication device, wherein the communication device is a second communication device and comprises:
a processing module, configured to perform a second operation, wherein
the second operation comprises at least one of the following:
sending third information to a first communication device, wherein the third information comprises information used to indicate at least one of the following: a terminal undergoes an inter-access network device transfer; a first QoS flow undergoes an inter-access network device transfer; the terminal has transferred from a first access network device to a second access network device; the first QoS flow has been transferred from the first access network device to the second access network device; a QoS flow bound to a first data flow has changed; the QoS flow bound to the first data flow has changed from a second QoS flow to the first QoS flow; and the first QoS flow has been established, and the second QoS flow has been released, or resources of the second QoS flow have been released;
sending fourth information to the first communication device, wherein the fourth information comprises at least one of the following: congestion information corresponding to the first data flow or the second QoS flow, and a QoS notification corresponding to the first data flow or the second QoS flow;
sending a QoS notification corresponding to the first data flow to the first communication device;
sending the congestion information corresponding to the first data flow to the first communication device;
sending information about a second endpoint to the first communication device, comprising at least one of the following: information about a second endpoint corresponding to a tunnel of the terminal, information about a second endpoint corresponding to the first QoS flow, and information about a second endpoint corresponding to the first data flow;
sending access network device side information to the first communication device, comprising at least one of the following: access network device side information of the tunnel of the terminal, access network device side information corresponding to the first QoS flow, and access network device side information corresponding to the first data flow; and
triggering an N4 modification process.

41. A communication device, wherein the communication device is a third communication device, comprising:
a processing module, configured to perform a third operation in a case that a third condition is met; wherein
the third condition comprises at least one of the following:
a terminal undergoes an inter-access network device transfer, or the terminal has transferred from a first access network device to a second access network device;
a first QoS flow undergoes an inter-access network device transfer, or the first QoS flow has been transferred from the first access network device to the second access network device; and
the first QoS flow has been established; wherein
the third operation comprises at least one of the following:
sending first information through a user plane tunnel corresponding to the first QoS flow;
sending a QoS notification through the user plane tunnel corresponding to the first QoS flow, or sending a QoS notification corresponding to the first QoS flow;
sending congestion information through the user plane tunnel corresponding to the first QoS flow, or sending congestion information corresponding to the first QoS flow;
sending, through the user plane tunnel corresponding to the first QoS flow, information indicating one of the following: no congestion, a congestion situation being a minimum value, a corresponding percentage of the congestion situation being a minimum value, and the congestion situation being zero or the corresponding percentage of the congestion situation being zero; and
sending information indicating one of the following through the user plane tunnel corresponding to the first QoS flow: not performing congestion marking on data packets, the number or a percentage of data packets required to be marked for congestion being a minimum value, and performing congestion marking on zero data packets or zero percent of data packets.

42. A communication device, comprising a processor and a memory, wherein a program or instructions capable of running executing on the processor are stored in the memory, and when the program or instructions are executed by the processor, the steps of the information interaction method according to any one of claims 1 to 15 are implemented; the steps of the information interaction method according to any one of claims 16 to 28 are implemented; or the steps of the information interaction method according to any one of claims 29 to 38 are implemented.

43. A readable storage medium, wherein the readable storage medium stores a program or instructions, and when the program or instructions are executed by a processor, the steps of the information interaction method according to any one of claims 1 to 15 are implemented; the steps of the information interaction method according to any one of claims 16 to 28 are implemented; or the steps of the information interaction method according to any one of claims 29 to 38 are implemented.
